# EUROPEAN PATENT APPLICATION

(11) **EP 4 653 945 A1**
(43) Date of publication of application: **26.11.2025**
(21) Application number: 24744797.2
(22) Date of filing: 10.01.2024
(51) Int. Cl.: G03B 3/10, G03B 13/36, G03B 5/04, G03B 17/12, H04N 23/54, H04N 23/55, H02K 41/035

(54) **CAMERA ACTUATOR AND CAMERA MODULE INCLUDING SAME**

(30) Priority: 18.01.2023 KR 20230007551; 20.01.2023 KR 20230008406
(71) Applicant: LG INNOTEK CO. LTD, Gangseo-gu Seoul 07796 (KR)
(72) Inventor: HONG, Dong Chan, Seoul 07796 (KR); KIM, Seul A, Seoul 07796 (KR); PARK, Young Bin, Seoul 07796 (KR); OH, Young Sun, Seoul 07796 (KR); LEE, Kap Jin, Seoul 07796 (KR)
(74) Representative: M. Zardi & Co S.A.
(86) International application number: PCT/KR2024/000492
(87) International publication number: WO 2024/155016

(57) **Abstract**

An embodiment of the present invention discloses a camera actuator which comprises: a housing; a first bobbin which moves in the optical axis direction inside the housing and comprises a first guiding area disposed on one surface thereof; a driving unit which moves the first bobbin; a first guide unit which is arranged in the housing and faces the first guiding area of the first bobbin; and a first ball which supports the first bobbin so as to move in the optical axis direction, wherein the first guiding area includes a first sub-guiding area disposed, along the optical axis direction, on one side of the one surface of the first bobbin, and a second sub-guiding area disposed, along the optical axis direction, on the other side of the one surface of the first bobbin, wherein the first sub-guiding area includes a first recess formed in a first edge area and a second recess formed in a second edge area spaced apart from the first edge area in the optical axis direction, the second sub-guiding area includes a third recess formed in a central area, and the length of the third recess in the optical axis direction is greater than the length of the first recess in the optical axis direction.

## Description

### [Technical Field]

The present invention relates to a camera actuator and a camera module including the same.

### [Background Art]

Cameras are devices which capture photos or videos of subjects and are installed in portable devices, drones, vehicles, and the like. Camera modules may have an image stabilization (IS) function of correcting or preventing the image shaking caused by a user's movement, an auto-focus function of automatically adjusting a gap between an image sensor and a lens to align the focal length of the lens, and a zoom function of increasing or decreasing the magnification of a distant subject using a zoom lens to improve the quality of the images.

Here, there are problems in that the reliability of camera actuators deteriorates due to the long movement of lenses in camera modules and the driving efficiency is reduced due to a bent structure. In addition, there is a problem that structural deformation occurs due to a part provided during assembly.

### [Disclosure]

### [Technical Problem]

A technical problem to be solved by embodiments of the present invention is to provide a camera actuator and a camera module having improved dynamic tilt and enhanced driving efficiency by adjusting the lengths of recesses in a bent lens assembly.

In addition, embodiments of the present invention may provide a camera actuator and a camera module having reduced current consumption by adjusting the sizes of a plurality of balls or the heights of recesses.

Furthermore, embodiments of the present invention may provide a camera actuator and a camera module having improved reliability using additional sub-balls.

In addition, embodiments of the present invention provide a camera actuator and a camera module having improved driving performance by adjusting the position of a base groove of a guide base to minimize the structural deformation occurring during an assembling process.

Furthermore, embodiments of the present invention may provide a camera actuator and a camera module having improved dimensional accuracy and driving accuracy by minimizing issues occurring during assembly through the shape of a guide unit.

Embodiments of the present invention provide a camera actuator applicable to ultra-slim, ultra-small, and high-resolution cameras.

The problems to be solved by the embodiments are not limited thereto, and purposes or effects which may be grasped from solutions or embodiments of the problems to be described below are also included.

### [Technical Solution]

A camera actuator according to an embodiment of the present invention includes: a housing; a first bobbin which moves in an optical axis direction in the housing and includes a first guiding region disposed on one surface thereof; a driving unit which moves the first bobbin; a first guide unit which is disposed in the housing and faces the first guiding region of the first bobbin; and a first ball which supports the first bobbin to move in the optical axis direction, in which the first guiding region includes a first sub-guiding region disposed in the optical axis direction on one side of the one surface of the first bobbin and a second sub-guiding region disposed in the optical axis direction on the other side of the one surface of the first bobbin, the first sub-guiding region includes a first recess formed in a first edge region and a second recess formed in a second edge region spaced apart from the first edge region in the optical axis direction, the second sub-guiding region includes a third recess formed in a central region thereof, and a length of the third recess in the optical axis direction is greater than a length of the first recess in the optical axis direction.

The first ball may include: a first sub-ball disposed in the first recess; a second sub-ball disposed in the second recess; and a third sub-ball disposed in the third recess.

The first sub-ball may be driven in the first recess, the second sub-ball may be driven in the second recess, and the third sub-ball may be driven in the third recess.

At least one of the first sub-ball and the second sub-ball may overlap a lens unit accommodated in the first bobbin in a horizontal direction.

At least one of the first recess and the second recess may overlap a lens unit accommodated in the first bobbin in a horizontal direction.

The first guide unit may include a first guide groove which faces the first sub-guiding region, and a second guide groove which faces the second sub-guiding region.

The first guide groove may have side surfaces which are inclined with respect to a bottom surface thereof, and the first guide groove may face the first sub-ball.

The length of the first recess in the optical axis direction may be one to two times a diameter of the first sub-ball, and the length of the third recess in the optical axis direction may be two times or more a diameter of the second sub-ball.

The first bobbin may include a wing surface which faces the first guide unit, and the wing surface may be inclined with respect to the optical axis direction in a predetermined region.

The second recess may be located in the wing surface, and the wing surface may be inclined toward an outside of the first bobbin.

The first sub-ball to the third sub-ball may not be arranged on the same plane.

A length of the first recess in the optical axis direction and the horizontal direction may vary.

The camera actuator may include a second bobbin which moves in the optical axis direction in the housing, may be disposed spaced apart from the first bobbin in the optical axis direction, and may include a second guiding region disposed on one side thereof, the second guiding region may include a fourth recess formed in a third edge region, a fifth recess formed in a fourth edge region spaced apart from the third edge region in the optical axis direction, and a sixth recess formed in a central region thereof, and a length of the sixth recess in the optical axis direction may be greater than a length of the fourth recess in the optical axis direction.

The second sub-guiding region may include a sub-recess formed spaced apart from the third recess in the optical axis direction, and the sub-recess may be formed in each of the first edge region and the second edge region.

The first ball may include an additional ball disposed in the sub-recess, and a diameter of the additional ball may be smaller than a diameter of the first sub-ball.

A camera actuator according to an embodiment includes: a housing; a first bobbin which moves in an optical axis direction in the housing; a driving unit which moves the first bobbin; a first guide unit which is disposed in the housing, faces the first bobbin, extends in the optical axis direction, and includes a first guide groove and a second guide groove spaced apart from each other; and a first sub-ball and a second sub-ball arranged between the first guide groove and the first bobbin and a third sub-ball disposed between the second guide groove and the first bobbin, in which the first bobbin includes a first edge region disposed at an edge, a second edge region spaced apart from the first edge region in the optical axis direction, and an intermediate region disposed between the first edge region and the second edge region, the first sub-ball is driven in the first edge region, the second sub-ball is driven in the second edge region, and the third sub-ball is driven in the intermediate region.

A camera actuator according to an embodiment of the present invention includes: a housing; a first lens assembly which moves in an optical axis direction in the housing; a driving unit which moves the first lens assembly; a first guide unit which is disposed in the housing and faces the first lens assembly; and a ball which is disposed between the first guide unit and the first lens assembly, in which the first guide unit includes a guide base which includes a first guide groove in which the ball is seated and a base groove located at an edge of the first guide unit and overlapping the first guide groove in the optical axis direction.

The first guide unit may include: a first extension portion which extends from one end of the guide base to one side; and a second extension portion extending from the other end of the guide base to the one side.

The first extension portion and the second extension portion may overlap the base groove in a direction perpendicular to the optical axis direction.

The guide base may include a guide hole, and the driving unit may include a coil disposed in the guide hole.

The guide hole may overlap the first guide groove in a direction perpendicular to the optical axis direction.

The base groove may include first base grooves disposed spaced apart from each other in the optical axis direction and a second base groove disposed on the other side.

The first base groove and the second base groove may overlap the first guide groove in the optical axis direction.

A length of the first base groove in the optical axis direction may be greater than a length of the second base groove in the optical axis direction.

The first base groove may be disposed spaced apart from the first guide groove in the optical axis direction.

The first guide groove may be open toward the second base groove.

A depth of the first base groove in a direction perpendicular to the optical axis direction may be smaller than a depth of the first guide groove in the direction perpendicular to the optical axis direction.

The first guide unit may include: a first region which overlaps the base groove in the optical axis direction; and a second region which overlaps the first extension portion and the second extension portion in the optical axis direction.

The driving unit may include: a magnet disposed in the first region; and a coil disposed in the second region.

The second extension portion may include a base coupling portion.

The housing may be in contact with the base groove.

### [Advantageous Effects]

According to embodiments of the present invention, a camera actuator and a camera module having improved dynamic tilt and enhanced driving efficiency by adjusting a length of a recess in a bent lens assembly can be implemented.

In addition, embodiments of the present invention can implement a camera actuator and a camera module having reduced current consumption by adjusting the sizes of a plurality of balls or the heights of recesses.

Furthermore, embodiments of the present invention can implement a camera actuator and a camera module having improved reliability using additional sub-balls.

In addition, embodiments of the present invention can implement a camera actuator and a camera module having improved driving performance by adjusting the position of a base groove of a guide base to minimize the structural deformation occurring during an assembling process.

Furthermore, embodiments of the present invention can implement a camera actuator and a camera module having improved dimensional accuracy and driving accuracy by minimizing issues occurring during assembly through the shape of a guide unit.

Furthermore, embodiments of the present invention can implement camera actuators and camera modules with improved reliability due to the additional sub-ball.

Embodiments of the present invention can implement a camera actuator applicable to ultra-slim, ultra-compact, and high-resolution cameras.

Various useful advantages and effects of the present invention are not limited to the above-described contents, and can be more easily understood in a process of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a view along line AA' in FIG. 1.
FIG. 4 is a perspective view of a second camera actuator according to the embodiment.
FIG. 5 is an exploded perspective view of the second camera actuator according to the embodiment.
FIG. 6 is a cross-sectional view along line DD' in FIG. 4.
FIGS. 7 and 8 are views for describing each driving of a lens assembly according to the embodiment.
FIG. 9 is a view for describing the operation of the second camera actuator according to the embodiment.
FIG. 10 is a perspective view of a first lens assembly, a first coupling member, a second coupling member, and a second lens assembly according to the embodiment.
FIG. 11 is a perspective view of a first lens assembly in a second camera actuator according to a first embodiment.
FIG. 12 is a side view of the first lens assembly in the second camera actuator according to the first embodiment.
FIG. 13A is a cross-sectional view along line EE' in FIG. 12.
FIG. 13B is a cross-sectional view along line E"E‴ in FIG. 12.
FIG. 14 is a cross-sectional view along line FF' in FIG. 12.
FIG. 15 is a drawing showing a first lens assembly, a first guide unit, a first ball, and a second ball in the second camera actuator according to the first embodiment.
FIG. 16 is a side view of a lens assembly in a second camera actuator according to a second embodiment.
FIG. 17 is a cross-sectional view along line GG' in FIG. 16.
FIG. 18 is a side view of a lens assembly in a second camera actuator according to a third embodiment.
FIG. 19 is a cross-sectional view along line HH' in FIG. 18.
FIG. 20 is a side view of a lens assembly in a second camera actuator according to a fourth embodiment.
FIG. 21 is a cross-sectional view along line II' in FIG. 20.
FIG. 22 is a side view of a lens assembly in a second camera actuator according to a fifth embodiment.
FIG. 23 is a view showing a first lens assembly, a first guide unit, a first ball, and a second ball in the second camera actuator according to the fifth embodiment.
FIG. 24 is a perspective view showing a first guide unit according to another embodiment.
FIG. 25 is a side view illustrating the first guide unit according to another embodiment.
FIG. 26 is a cross-sectional view along line GG' in FIG. 25.
FIG. 27 is a cross-sectional view along line HH' in FIG. 25.
FIG. 28 is another side view showing the first guide unit according to another embodiment.
FIG. 29 is another perspective view showing the first guide unit according to another embodiment.
FIG. 30 is still another side view showing the first guide unit according to another embodiment.
FIG. 31 is an internal perspective view of a second camera actuator according to another embodiment.
FIG. 32 is a cross-sectional view along line II in FIG. 4.
FIG. 33 is a plan view of the second camera actuator according to another embodiment.
FIG. 34 is a perspective view and a partially enlarged view of the second camera actuator according to another embodiment.
FIG. 35 is an enlarged view of a rear end of the second camera actuator according to another embodiment.
FIG. 36 is a schematic diagram showing a circuit board according to the embodiment.
FIG. 37 is a perspective view of a mobile terminal to which the camera module according to the embodiment is applied.
FIG. 38 is a perspective view of a vehicle to which the camera module according to the embodiment is applied.

### [Modes of the Invention]

The present invention may have various modifications and embodiments and specific embodiments are exemplified in the drawings and described. Here, this is not intended to limit the present invention to specific embodiments, but should be understood to include all modifications, equivalents, or substitutes included in the spirit and technical scope of the present invention.

Although terms that include ordinal numbers such as second and first may be used for describing various components, the components are not limited by these terms. These terms are used only for distinguishing one component from another. For example, without departing from the scope of the present invention, a second component could be named a first constituent, and similarly, the first component could also be named the second component. The term and/or includes any combination of a plurality of related described items or any item among the plurality of related described items.

When it is said that a component is "connected" or "coupled" to another component, although it should be understood that it may be directly connected or coupled to that other component, another component may also be present therebetween. On the other hand, when it is said that any component is "directly connected" or "directly coupled" to another component, it should be understood that another component is not present therebetween.

The terminology used in this application is used only for describing specific embodiments and is not intended to limit the present invention. Singular expressions include plural expressions unless the context clearly indicates otherwise. In this application, it should be understood that terms such as terms "include" or "have" are intended to specify the presence of a feature, a number, a step, an operation, a component, a part or a combination thereof described in the specification, but do not exclude in advance the possibility of the presence or the addition of one or a plurality of other features, numbers, steps, operations, components, parts or combinations thereof.

Unless otherwise defined, all terms used herein, including technical or scientific terms, have the same meaning as commonly understood by one of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in this application.

Hereinafter, embodiments will be described in detail with reference to the attached drawings. Regardless of the drawing symbols, the same or corresponding components are denoted by the same reference numerals and redundant descriptions thereof will be omitted.

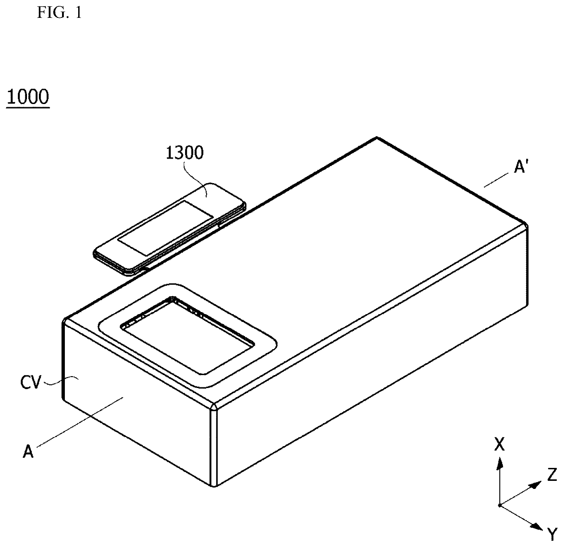

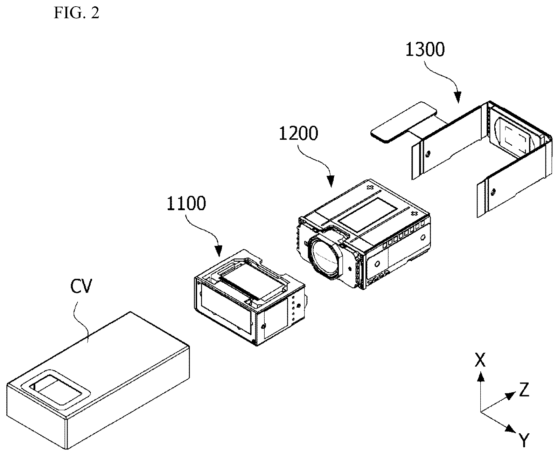

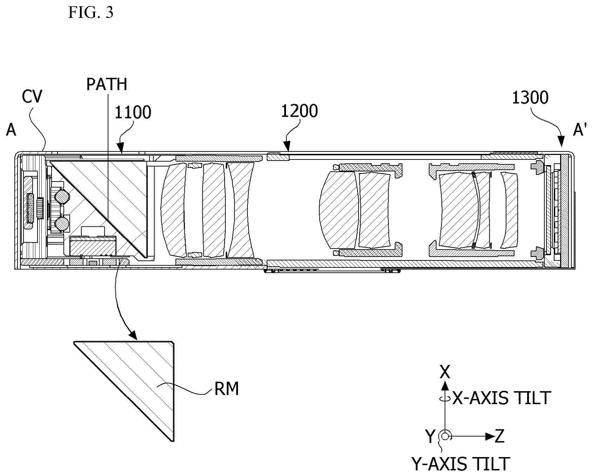

FIG. 1 is a perspective view of a camera module according to an embodiment, FIG. 2 is an exploded perspective view of the camera module according to the embodiment, and FIG. 3 is a cross-sectional view along line AA' in FIG. 1.

Referring to FIGS. 1 and 2, a camera module 1000 according to the embodiment may be composed of a cover CV, a first camera actuator 1100, a second camera actuator 1200, and a circuit board 1300. Here, the first camera actuator 1100 may be used interchangeably with a first actuator and the second camera actuator 1200 may be used interchangeably with a second actuator.

The cover CV may cover the first camera actuator 1100 and the second camera actuator 1200. A coupling force between the first camera actuator 1100 and the second camera actuator 1200 may be improved using the cover CV.

Furthermore, the cover CV may be made of a material that performs electromagnetic shielding. Thus, the first camera actuator 1100 and the second camera actuator 1200 in the cover CV may be easily protected.

Further, the first camera actuator 1100 may be an optical image stabilization (OIS) actuator. For example, the first camera actuator 1100 may move an optical member in a direction perpendicular to an optical axis (an axis of incident light).

The first camera actuator 1100 may include a fixed focal length lens disposed in a predetermined barrel (not shown). The fixed focal length lens may also be referred to as a "single focal length lens" or a "prime lens."

The first camera actuator 1100 may change an optical path. In an embodiment, the first camera actuator 1100 may vertically change the optical path through an internal optical member (for example, a prism or a mirror). For example, the optical member may change a direction of light from a first direction (X-axis direction) to a third direction (Z-axis direction). Alternatively, the optical member may change an axis of light from a first axis to a second axis. With this configuration, a configuration of lenses having sizes greater than a thickness of a mobile device may be disposed in the mobile device to perform magnification, auto-focus (AF), zoom, and OIS functions, even though the thickness of the mobile device is reduced, by changing the optical path.

However, the present invention is not limited thereto and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. Further, the second camera actuator 1200 and the first camera actuator 1100 may be coupled in various ways.

Furthermore, the second camera actuator 1200 may be a zoom actuator or an AF actuator. For example, the second camera actuator 1200 may support one or a plurality of lenses and move the lenses in response to a control signal from a predetermined control unit to perform an auto-focus function or a zoom function.

Further, one or the plurality of lenses may move independently or individually in the optical axis direction and
the circuit board 1300 may be disposed at a rear end of the second camera actuator 1200. The circuit board 1300 may be electrically connected to the second camera actuator 1200 and the first camera actuator 1100. Moreover, a plurality of circuit boards 1300 may be provided.

The camera module according to the embodiment may be composed of one or a plurality of camera modules. For example, the plurality of camera modules may include a first camera module and a second camera module.

Further, the first camera module may include one or a plurality of actuators. For example, the first camera module may include the first camera actuator 1100 and the second camera actuator 1200.

Further, the second camera module may be disposed in a predetermined housing (not shown) and include an actuator (not shown) capable of driving a lens unit. The actuator may be a voice coil motor, a micro actuator, a silicon actuator, or the like and applied in various ways, including but not limited to capacitive, thermal, bimorph, and electrostatic methods. In addition, in this specification, the camera actuator may be referred to as an actuator or the like. In addition, a camera module composed of a plurality of camera modules may be mounted in various electronic devices, such as a mobile terminal and the like. Furthermore, the actuator may be a device for moving or tilting a lens and an optical member. Here, in the following description, the actuator is described as a concept in which the actuator includes a lens or an optical element. Furthermore, the actuator may be referred to as a 'lens transfer device', a 'lens movement device', an 'optical element transfer device', an 'optical element movement device', or the like.

Referring to FIG. 3, the camera module according to the embodiment may include the first camera actuator 1100 that performs an OIS function and the second camera actuator 1200 that performs zoom and AF functions.

Light may be incident into the camera module or the first camera actuator through an aperture region located in an upper surface of the first camera actuator 1100. That is, light may be first incident into the first camera actuator 1100 in a vertical direction (for example, the X-axis direction, based on incident light), and the optical path may be changed to the optical axis direction (for example, the Z-axis direction) through the optical member. Further, light may pass through the second camera actuator 1200 and may be incident on the image sensor IS located at one end of the second camera actuator 1200 (PATH). In this specification, the Z-axis direction or the third direction is described as the optical axis direction as follows. Also, the first direction, the X-axis direction, is described as the vertical direction. Further, the second direction, the Y-axis direction, is described as a horizontal direction.

In this specification, a bottom surface means one side in the first direction. Further, the first direction is the X-axis direction in the drawings and may be used interchangeably with the second axis direction or the like. The second direction is the Y-axis direction in the drawings and may be used interchangeably with the first-axis direction or the like. The second direction is a direction perpendicular to the first direction. Also, the third direction is the Z-axis direction in the drawings and may be used interchangeably with the third-axis direction or the like. Further, the third direction is a direction perpendicular to both the first and second directions. Here, the third direction (Z-axis direction) corresponds to a direction of the optical axis, and the first direction (X-axis direction) and the second direction (Y-axis direction) are directions perpendicular to the optical axis. Also, the following description of the first and second camera actuators is made based on the optical axis direction being the third direction (Z-axis direction).

Furthermore, in this specification, an inner side may be a side in a direction from the cover CV toward the first camera actuator, and an outer side may be a side in a direction opposite to that of the inner side. That is, the first camera actuator and the second camera actuator may be located inside the cover CV, and the cover CV may be located outside the first camera actuator or the second camera actuator.

Further, with this configuration, the camera module according to the embodiment can improve the spatial limitations of the first camera actuator and the second camera actuator by changing the optical path. That is, the camera module according to the embodiment can expand the optical path while minimizing the thickness of the camera module in response to a change in the optical path. Furthermore, it should be understood that the second camera actuator can also provide a high range of magnification by controlling a focus or the like in the expanded optical path.

Furthermore, the camera module according to the embodiment can implement OIS through control of the optical path via the first camera actuator, thereby minimizing the occurrence of decentering or tilt phenomena and producing the best optical characteristics.

Furthermore, the second camera actuator 1200 may include an optical system and a lens driving unit. For example, the second camera actuator 1200 may have at least one of a first lens assembly, a second lens assembly, and a third lens assembly disposed therein.

Also, the second camera actuator 1200 may include a coil and a magnet to perform a high magnification zoom function and an auto-focus function.

For example, although the first lens assembly and the second lens assembly may be moving lenses that move via coils, magnets, and guide pins, and the third lens assembly may be a fixed lens, the present invention is not limited thereto. For example, the third lens assembly may function as a focator that forms a light image on a specific location, and the first lens assembly may function as a variator that reforms the image formed in the third lens assembly, which is a condenser, on a different location. Meanwhile, the first lens assembly may have a significant change in magnification due to a significant change in a distance to the subject or an image distance, and the first lens assembly, which is a variator, may play an important role in the focal length or the magnification change of the optical system. Meanwhile, an image point that is formed in the first lens assembly, which is a variator, may vary slightly depending on the location thereof. Thus, the second lens assembly may perform a location compensation function for the image formed using the variator. For example, the second lens assembly may function as a compensator, which functions to accurately form the image point formed in the first lens assembly, which is a variator, on an actual position of the image sensor. For example, the first lens assembly and the second lens assembly may be driven using an electromagnetic force due to the interaction of the coil and the magnet. The above description can be applied to the lens assembly which will be described below. Furthermore, the first lens assembly to the third lens assembly may move in the optical axis direction, that is, the third direction. Further, the first lens assembly to the third lens assembly may move in the third direction independently or dependently. In the present invention, the first lens assembly and the second lens assembly may move in the optical axis direction. Further, the third lens assembly may be located at a front end of the first lens assembly or at a rear end of the second lens assembly. Further, the third lens assembly may not move in the optical axis direction. That is, the third lens assembly may be a fixed unit. Furthermore, the first and second lens assemblies may be moving units.

Meanwhile, when an actuator for OIS and an actuator for AF/zoom are disposed according to the embodiment of the present invention, magnetic interference with a magnet for AF/zoom may be prevented when driving OIS. Since a first driving magnet of the first camera actuator 1100 is disposed separately from the second camera actuator 1200, magnetic interference between the first camera actuator 1100 and the second camera actuator 1200 may be prevented. In this specification, OIS may be interchangeably referred to as image stabilization, optical image stabilization, optical image correction, and shake correction.

Particularly, in the first camera actuator 1100, an optical member RM may be tilted with respect to the X-axis or the Y-axis. Accordingly, it is possible to easily change the optical path according to the X-axis tilt or the Y-axis tilt.

The optical member RM may be seated in a holder of the first camera actuator. In an embodiment, the optical member RM may be formed of a mirror or a prism. Although the following description is made based on the optical member RM which is formed of a prism, the optical member RM may also be formed of a plurality of lenses as in the above-described embodiment. Alternatively, the optical member RM may be formed of a plurality of lenses and prisms or mirrors. Further, the optical member RM may include a reflector disposed therein. Here, the present invention is not limited thereto.

In the first camera actuator 1100, the optical member RM may be tilted with respect to the X-axis or the Y-axis by driving a VCM or the like. That is, OIS may be implemented by tilting or rotating the optical member RM with respect to the Y-axis direction or the X-axis direction.

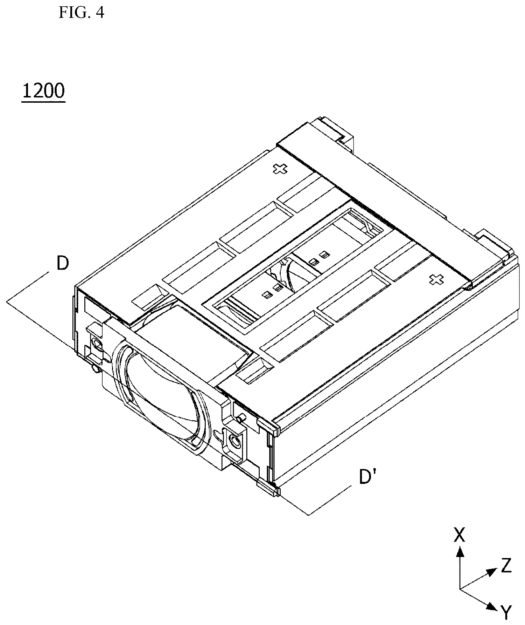

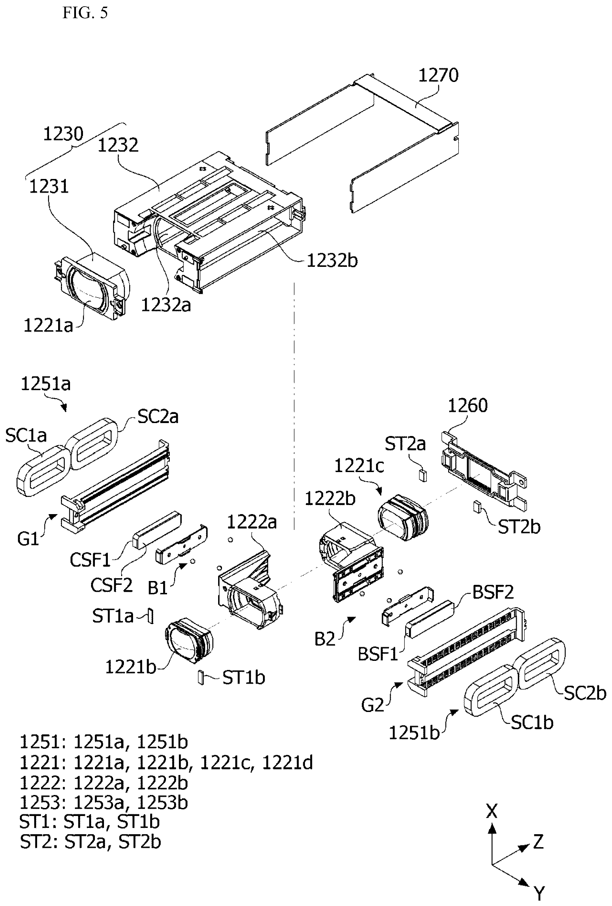

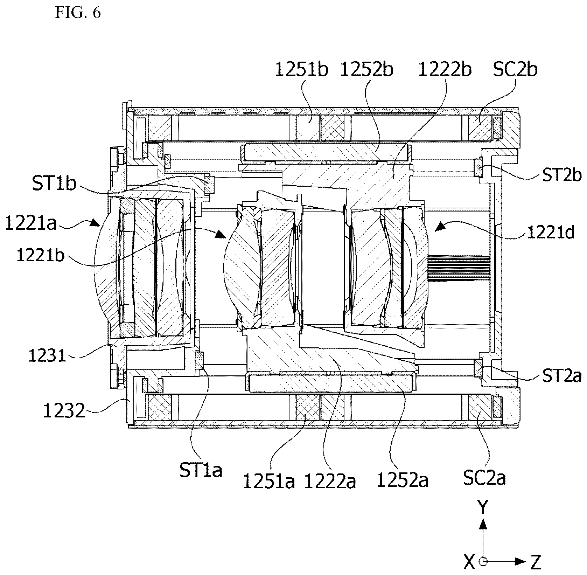

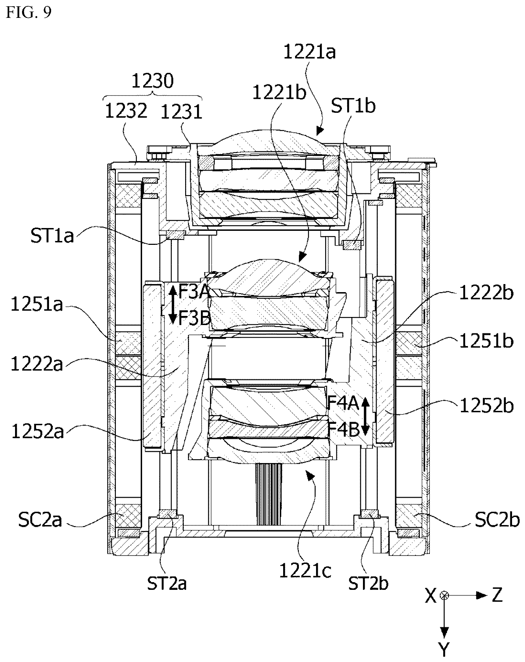

FIG. 4 is a perspective view of a second camera actuator according to the embodiment, FIG. 5 is an exploded perspective view of the second camera actuator according to the embodiment, FIG. 6 is a cross-sectional view along line DD' in FIG. 4, FIGS. 7 and 8 are views for describing each driving of a lens assembly according to the embodiment, and FIG. 9 is a view for describing the operation of the second camera actuator according to the embodiment.

Referring to FIGS. 4 to 6, the second camera actuator 1200 (or the camera device, the zoom lens transfer device, the zoom lens movement device, or the lens transfer device) according to the embodiment may include a lens unit 1220, a housing 1230, a driving unit 1250, a base unit 1260, a substrate unit 1270, and stoppers ST1 and ST2. Furthermore, the second camera actuator 1200 may further include a shield can (not shown), an elastic unit (not shown), and a coupling member (not shown).

In addition, a lens group may move in the optical axis direction, as will be described below. Further, the lens group may be coupled to the lens assembly and move together in the optical axis direction. In this case, the second camera actuator may include a moving unit that moves in the optical axis direction, like the lens group, and a fixed unit that does not move in the optical axis direction and is relatively fixed, unlike the moving unit. In this embodiment, the moving unit may include lens assemblies (for example, first and second lens assemblies) and optical driving magnets (first and second driving magnets). Further, the fixed unit may include a housing, a substrate unit, optical driving coils (first and second coils), and a Hall sensor. Furthermore, a driving magnet may be disposed on any one of the moving unit and the fixed unit, and a driving coil may be disposed on the other. In response to this description, a movement distance of the lens assembly, which will be described below, may correspond to a movement distance of the moving unit.

The shield can (not shown) may be located in one region (for example, the outermost region) of the second camera actuator 1200 to surround components which will be described below (the lens unit 1220, the housing 1230, the driving unit 1250, the base unit 1260, the substrate unit 1270, and an image sensor IS which is disposed on a circuit board at a rear end thereof).

The shield can (not shown) may block or reduce the electromagnetic waves generated from the outside. Accordingly, the occurrence of malfunctions in the driving unit 1250 can be reduced.

The lens unit 1220 may be located in the shield can (not shown). The lens unit 1220 may move in the third direction (Z-axis direction or optical axis direction). Accordingly, the AF function or the zoom function described above may be performed.

Additionally, the lens unit 1220 may be located in the housing 1230. Accordingly, at least a part of the lens unit 1220 may move in the housing 1230 in the optical axis direction or the third direction (Z-axis direction).

Specifically, the lens unit 1220 may include a lens group 1221 and a moving assembly 1222.

First, the lens group 1221 may include one or more lenses. Additionally, although a plurality of lens groups 1221 may be provided, the following description is made based on one lens group.

The lens group 1221 may be coupled to the moving assembly 1222 and may move in the third direction (Z-axis direction) using the electromagnetic force generated from a first magnet 1252a and a second magnet 1252b coupled to the moving assembly 1222.

In an embodiment, the lens group 1221 may include a first lens group 1221a, a second lens group 1221b, and a third lens group 1221c. The first lens group 1221a, the second lens group 1221b, and the third lens group 1221c may be sequentially disposed in the optical axis direction. Furthermore, the lens group 1221 may further include a fourth lens group. The fourth lens group may be disposed at a rear end of the third lens group 1221c.

The first lens group 1221a may be coupled and fixed to a 2-1 housing (or fixed assembly). In other words, the first lens group 1221a may not move in the optical axis direction.

The second lens group 1221b may be coupled to a first lens assembly 1222a and may move in the third direction or the optical axis direction. Magnification adjustment may be performed by moving the first lens assembly 1222a and the second lens group 1221b.

The third lens group 1221c may be coupled to a second lens assembly 1222b and may move in the third direction or the optical axis direction. Focus adjustment or auto-focus may be performed by moving the third lens group 1221c.

Here, the number of lens groups is not limited, and the fourth lens group described above may not be present, or an additional lens group or the like other than the fourth lens group 1221d may be disposed.

The moving assembly 1222 may include an aperture region that surrounds the lens group 1221. The moving assembly 1222 may be used interchangeably with the first and second lens assemblies. Additionally, the moving assembly 1222 may be used interchangeably with the first and second bobbins. The moving assembly 1222 or the lens assembly may move in the optical axis direction (Z-axis direction) in the housing 1230. Further, the moving assembly 1222 may be coupled to the lens group 1221 in various ways. Additionally, the moving assembly 1222 may include a groove in a side surface thereof and may be coupled to the first magnet 1252a and the second magnet 1252b through the groove. A coupling member or the like may be applied to the groove.

Additionally, the moving assembly 1222 may be coupled to the elastic units (not shown) at upper and rear ends thereof. Accordingly, the moving assembly 1222 may move in the third direction (Z-axis direction) while supported by the elastic members (not shown). That is, the position of the moving assembly 1222 may be maintained and the direction of the moving assembly 1222 may be maintained in the third direction (in the Z-axis direction). The elastic units (not shown) may be formed of various elastic elements, such as a plate spring.

The moving assembly 1222 may be located in the housing 1230 and include the first lens assembly 1222a and the second lens assembly 1222b.

A region where the third lens group is seated in the second lens assembly 1222b may be located at a rear end of the first lens assembly 1222a. In other words, the region where the third lens group 1221c is seated in the second lens assembly 1222b may be located between a region where the second lens group 1221b is seated in the first lens assembly 1222a and the image sensor.

The first lens assembly 1222a and the second lens assembly 1222b may face a first guide unit G1 and a second guide unit G2, respectively. The first guide unit G1 and the second guide unit G2 may be located at a first side portion 1232a and a second side portion 1232b of the housing 1230 (or 2-2 housing) which will be described below. For example, in the housing 1230, the first lens assembly 1222a may face the first guide unit G1. Further, in the housing 1230, the second lens assembly 1222b may face the second guide unit G2.

Further, the optical driving magnets may be seated on outer surfaces of the first lens assembly 1222a and the second lens assembly 1222b. For example, the second magnet 1252b may be seated on the outer surface of the second lens assembly 1222b. The first magnet 1252a may be seated on the outer surface of the first lens assembly 1222a. In this specification, the first lens assembly 1222a may be interchangeably referred to as a 'first bobbin.' The second lens assembly 1222b may be interchangeably referred to as a 'second bobbin.' That is, the lens assembly may be a concept in which the lens assembly includes both structures in which the lens assembly includes or does not include a lens.

The housing 1230 may be disposed between the lens unit 1220 and the shield can (not shown). Further, the housing 1230 may be disposed to surround the lens unit 1220.

The housing 1230 may include a 2-1 housing 1231 and a 2-2 housing 1232. The 2-1 housing 1231 may be coupled to the first lens group 1221a and may also be coupled to the first camera actuator described above. The 2-1 housing 1231 may be located in front of the 2-2 housing 1232. The 2-1 housing may be referred to as a "fixed assembly," a "fixed lens assembly," a "fixed lens accommodating portion," or the like. The 2-2 housing may be referred to as a 'main barrel,' a 'lens barrel,' a 'barrel,' or the like.

Further, the 2-2 housing 1232 may be located at a rear end of the 2-1 housing 1231. The first and second lens assemblies and the lens unit 1220 may be seated inside the 2-2 housing 1232.

The housing 1230 (or the 2-2 housing 1232) may have holes formed in side portions thereof. A first coil 1251a and a second coil 1251b may be disposed in the holes. The holes may be positioned to correspond to the grooves in the moving assembly 1222 described above. In this case, a plurality of first coils 1251a and a plurality of second coils 1251b may be provided.

In an embodiment, the housing 1230 (particularly, the 2-2 housing 1232) may include the first side portion 1232a and the second side portion 1232b. The first side portion 1232a and the second side portion 1232b may be located to correspond to each other. For example, the first side portion 1232a and the second side portion 1232b may be symmetrically disposed with respect to the third direction. An optical driving coil 1251 may be located on the first side portion 1232a and the second side portion 1232b. Further, the substrate unit 1270 may be seated on outer surfaces of the first side portion 1232a and the second side portion 1232b. In other words, a first substrate may be located on an outer surface of the first side portion 1232a, and a second substrate may be located on an outer surface of the second side portion 1232b.

Furthermore, the first guide unit G1 and the second guide unit G2 may be located in the first side portion 1232a and the second side portion 1232b of the housing 1230 (particularly, the 2-2 housing 1232).

The first guide unit G1 and the second guide unit G2 may be positioned to correspond to each other. For example, the first guide unit G1 and the second guide unit G2 may be positioned opposite to each other with respect to the third direction (Z-axis direction). Additionally, the first guide unit G1 and the second guide unit G2 may at least partially overlap each other in the second direction (Y-axis direction).

The first guide unit G1 and the second guide unit G2 may include one or more grooves (for example, guide grooves) or recesses. Further, a first ball B1 or a second ball B2 may be seated in the grooves or the recesses. The second camera actuator 1200 may further include a ball unit. The ball unit may include the first ball B1 and the second ball B2. By means of the ball unit, the first and second lens assemblies may move in the optical axis direction. In this case, the ball unit may include one or more rolling members and balls. Further, one or more balls may move along a guide groove of the first or second guide unit. Furthermore, one or more balls may move along the recesses or grooves in the first and second lens assemblies. Accordingly, the first ball B1 or the second ball B2 may move in the third direction (Z-axis direction) in the guide groove of the first guide unit G1 or the guide groove of the second guide unit G2. The first ball B1 may support the first bobbin so that the first bobbin moves in the optical axis direction. Additionally, the second ball B2 may support the second bobbin so that the second bobbin moves in the optical axis direction.

Alternatively, the first ball B1 or the second ball B2 may move in the third direction along a rail formed on an inner side of the first side portion 1232a of the housing 1230, or a rail formed on an inner side of the second side portion 1232b of the housing 1230. For example, the first ball B1 may move along the rail formed on the inner side of the first side portion 1232a. Further, the second ball B2 may move along the rail formed on the inner side of the second side portion 1232b.

Thus, the first lens assembly 1222a and the second lens assembly 1222b may move in the third direction or the optical axis direction. In this case, the second lens assembly 1222b may be disposed further adjacent to or closer to the image sensor than the first lens assembly 1222a.

According to the embodiment, the first ball B1 may come into contact with the first lens assembly 1222a. The second ball B2 may come into contact with the second lens assembly 1222b. Thus, the first ball B1 and the second ball B2 may overlap at least partially in the first direction (X-axis direction) depending on the position thereof.

Furthermore, the first guide unit G1 may include a first guide groove group GG1a and GG1b facing a first recess portion RS1. Furthermore, the second guide unit G2 may include a second guide groove group GG2a and GG2b facing a second recess portion RS2. The first guide groove group GG1a and GG1b may be used interchangeably with the first guide groove described above. Additionally, the second guide groove group GG2a and GG2b may be used interchangeably with the second guide groove described above.

The first guide groove group GG1a and GG1b and the second guide groove group GG2a and GG2b may be grooves extending in the third direction (Z-axis direction). Further, the first guide groove group GG1a and GG1b and the second guide groove group GG2a and GG2b may be grooves having different shapes. For example, the first guide groove group GG1a and GG1b and the second guide groove group GG2a and GG2b may have at least one groove with an inclined side surface and the other groove with side surfaces perpendicular to a bottom surface thereof.

Additionally, a plurality of first guide groove groups GG1a and GG1b or a plurality of second guide groove group GG2a and GG2b may be provided. The first guide groove group GG1a and GG1b or the second guide groove group GG2a and GG2b may include a plurality of guide grooves. Further, a plurality of balls having at least some different diameters may be located in the plurality of guide grooves.

The second magnet 1252b may be positioned to face the second coil 1251b. Furthermore, the first magnet 1252a may be positioned to face the first coil 1251a.

For example, at least one of the first coil 1251a and the second coil 1251b may be composed of one or more coils. For example, the first coil 1251a may be composed of a plurality of coils. The second coil 1251b may be composed of a plurality of coils. The first and second coils may be formed as one coil. The first coil may be made of one coil, and the second coil may be made of one coil. Long strokes may also be implemented in this case.

In an embodiment, the optical driving coil 1251 may be composed of sub-coils sequentially disposed in the optical axis direction (Z-axis direction). For example, the plurality of sub-coils may be sequentially disposed in the optical axis direction on both sides of the main barrel 1232.

In this embodiment, the optical driving coil 1251 may include a first driving unit and a second driving unit. The first driving unit may provide a driving force which moves the first lens assembly 1222a in the optical axis direction. The first driving unit may include the first coil 1251a and the first magnet 1252a. Furthermore, the first driving unit may include a first driving coil and a first driving magnet. Accordingly, the first coil 1251a may be referred to as a 'first driving coil.' Further, the first magnet 1252a may be referred to as a 'first driving magnet.'

Further, the second driving unit may provide a driving force which moves the second lens assembly 1222b in the optical axis direction. The second driving unit may include the second coil 1251b and the second magnet 1252b.

Furthermore, the second driving unit may include a second driving coil and a second driving magnet. Accordingly, the second coil 1251b may be referred to as a 'second driving coil.' Further, the second magnet 1252b may be referred to as a 'second driving magnet.'

The elastic units (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. Furthermore, the first elastic member (not shown) and the second elastic member (not shown) are formed of plate springs as described above. Additionally, the first elastic member (not shown) and the second elastic member (not shown) may provide elasticity for movement of the moving assembly 1222. However, the present invention is not limited to the above-described positions, and the elastic units may be disposed at various positions.

Further, the driving unit 1250 may provide a driving force which moves the lens unit 1220 in the third direction (Z-axis direction). The driving unit 1250 may include the optical driving coil 1251 and the optical driving magnet 1252. The optical driving coil 1251 and the optical driving magnet 1252 may be positioned to face each other. For example, the first driving coil 1251a and the first driving magnet 1252a may be positioned to face each other. Furthermore, the second driving coil 1251b and the second driving magnet 1252b may be positioned to face each other. The first driving coil 1251a may be disposed on one side in the second direction in the housing, and the second driving coil 1251a may be disposed on the other side in the second direction in the housing.

Furthermore, the driving unit 1250 may further include a Hall sensor unit. A Hall sensor unit 1253 includes one or more first Hall sensors 1253a and second Hall sensors 1253b, and may be located inside or outside the optical driving coil 1251.

The moving assembly may move in the third direction (Z-axis direction) using the electromagnetic force formed between the optical driving coil 1251 and the optical driving magnet 1252.

The optical driving coil 1251 may include the first coil 1251a and the second coil 1251b. Furthermore, as described above, the first coil 1251a and the second coil 1251b may be composed of a plurality of sub-coils. Additionally, the first coil 1251a and the second coil 1251b may be disposed in holes formed in the side portions of the housing 1230. Further, the first coil 1251a and the second coil 1251b may be electrically connected to the substrate unit 1270. Accordingly, the first coil 1251a and the second coil 1251b may receive a current or the like supplied through the substrate unit 1270.

Further, the optical driving coil 1251 may be coupled to the substrate unit 1270 through a yoke or the like.

Furthermore, in an embodiment, the optical driving coil 1251 is a fixed element together with the substrate unit 1270. On the other hand, the optical driving magnet 1252 is a moving element that moves in the optical axis direction (Z-axis direction) together with the first and second assemblies.

The optical driving magnet 1252 may include the first magnet 1252a and the second magnet 1252b.

In an embodiment, the first coil 1251a may include a first sub-coil SC1a and a second sub-coil SC2a. The first sub-coil SC1a and the second sub-coil SC2a may be sequentially disposed in the optical axis direction. The first sub-coil SC1a may be positioned closer to the first camera actuator than the second sub-coil SC2a.

Further, the second coil 1251b may include a third sub-coil SC1b and a fourth sub-coil SC2b. The third sub-coil SC1b and the fourth sub-coil SC2b may be sequentially disposed in the optical axis direction. The third sub-coil SC1b may be positioned closer to the first camera actuator than the fourth sub-coil SC2b.

Further, the first magnet 1252a may face the first sub-coil SC1a and the second sub-coil SC2a. The second magnet 1252b may face the third sub-coil SC1b and the fourth sub-coil SC2b. The first sub-coil SC1a may be positioned to overlap the third sub-coil SC1b in the second direction. The second sub-coil SC2a may be positioned to overlap the fourth sub-coil SC2b in the second direction. In this way, the first magnet 1252a and the second magnet 1252b may be disposed to face two sub-coils in the same manner.

The first sub-coil SC1a and the second sub-coil SC2a may be arranged spaced apart from each other in the optical axis direction. The first sub-coil SC1a and the second sub-coil SC2a may be connected in parallel with each other. For example, any one of one end and the other end of the first sub-coil SC1a and any one of one end and the other end of the second sub-coil SC2a may be connected with one node. Further, one of one end and the other end of the first sub-coil SC1a and the other of one end and the other end of the second sub-coil SC2a may be connected as another node. That is, a current applied to the first sub-coil SC1a and the second sub-coil SC2a may be distributed to each of the sub-coils. Thus, the first sub-coil SC1a and the second sub-coil SC2a are electrically connected in parallel with each other, which can reduce heat generation.

Furthermore, the polarity of one surface of the first driving magnet 1252a facing the first coil may be the same as the polarity of one surface of the second driving magnet 1252b facing the second coil. For example, an inner surface of the first driving magnet 1252a and an inner surface of the second driving magnet 1252b may be one of an N pole and an S pole (for example, an N pole). An outer surface of the first driving magnet 1252a and an outer surface of the second driving magnet 1252b may be the other of the N pole and the S pole (for example, the S pole). Here, the inner surface may be a side surface adjacent to the optical axis with respect to the optical axis, and the outer surface may be a side surface away from the optical axis. Furthermore, the first magnet 1252a may have a first polarity on a first surface BSF1 facing the optical driving coil (for example, the first coil). Further, the first magnet 1252a may have a second polarity on a second surface BSF2 that is a surface opposite to the first surface BSF1. The second magnet 1252b may have a first pole on a first surface BSF1 facing the optical driving coil (for example, the second coil). Further, the second magnet 1252b may have a second pole on the second surface BSF2 that is a surface opposite to the first surface BSF1. The first pole may be one of an N pole and an S pole. Further, the second pole may be the other of the N and S polarities.

Alternatively, the first driving magnet and the second driving magnet may have a structure in which the N pole/S pole or the S pole/N pole are sequentially disposed in the optical axis direction.

Furthermore, the third sub-coil SC1b and the fourth sub-coil SC2b may be arranged spaced apart from each other in the optical axis direction. The third sub-coil SC1b and the fourth sub-coil SC2b may be connected in parallel with each other. For example, any one of one end and the other end of the third sub-coil SC1b and any one of one end and the other end of the fourth sub-coil SC2b may be connected as one node.

The first magnet 1252a and the second magnet 1252b may be disposed in the above-described grooves of the moving assembly 1222, and may be positioned to correspond to the first coil 1251a and the second coil 1251b. Further, the optical driving magnet 1252 may be coupled to the first and second lens assemblies (or moving assembly) together with a yoke to be described below.

The base unit 1260 may be located between the lens unit 1220 and the image sensor in the circuit board. A component such as a filter may be fixed to the base unit 1260. Additionally, the base unit 1260 may be disposed to surround the image sensor described above. With this configuration, the image sensor is free from foreign matter, which can improve the reliability of the device. However, this configuration is omitted in some of the drawings and will be described below.

Furthermore, the second camera actuator 1200 may be a zoom actuator or an auto-focus actuator. For example, the second camera actuator supports one or a plurality of lenses and may move the lenses in response to a control signal from a predetermined control unit to perform an auto-focus function or a zoom function.

Further, the second camera actuator may be a fixed zoom or a continuous zoom. For example, the second camera actuator may move the lens group 1221.

Furthermore, the second camera actuator may be composed of a plurality of lens assemblies. For example, in the second camera actuator, one or more of the third lens assembly (not shown) and the guide pin (not shown) may be disposed, in addition to the first lens assembly 1222a and the second lens assembly 1222b. The above description can be applied to this. Thus, the second camera actuator may perform a high magnification zoom function via the driving unit.

The image sensor may be located inside or outside the second camera actuator. In an embodiment, the image sensor may be located outside the second camera actuator, as shown in the drawing. For example, the image sensor may be located on the circuit board. The image sensor may receive light and convert the received light into electrical signals. Furthermore, the image sensor may be composed of a plurality of pixels arranged in an array form. Further, the image sensor may be located on the optical axis.

The substrate unit 1270 may come into contact with a side portion of the housing. For example, the substrate unit 1270 may be located on an outer surface (first side surface) of a first side portion and an outer surface (second side surface) of a second side portion of the housing, particularly, the 2-2 housing, and may come into contact with the first side surface and the second side surface.

The second camera actuator may further include first stoppers ST1a and ST1b disposed at one end (or front end) and second stoppers ST2a and ST2b disposed at the other end (or rear end) in the housing (or 2-2 housing 1232).

The first stopper ST1 may be located at one end in the housing. For example, the first stopper ST1 may be located at an end portion in a direction opposite to the optical axis direction in the 2-2 housing or the main barrel 1232.

Furthermore, the first stopper ST1 may include a 1-1 stopper ST1a disposed on one side and a 1-2 stopper ST1b disposed on the other side. The 1-1 stopper ST1a may be positioned adjacent to the first side portion. The 1-2 stopper ST1b may be positioned adjacent to the second side portion. One side and the other side may mean one side and a side opposite thereto in the second direction.

Alternatively, the 1-1 stopper ST1a may overlap the guiding unit of the first lens assembly in the optical axis direction.

Additionally, the second stopper ST2 may be disposed at the other end in the 2-2 housing or the main barrel 1232. For example, the second stopper ST2 may be located at an end portion in the optical axis direction in the 2-2 housing or the main barrel 1232.

Additionally, the second stopper ST2 may include a 2-1 stopper ST2a disposed on one side and a 2-2 stopper ST2b disposed on the other side. The 2-1 stopper ST2a may be positioned adjacent to the first side portion. The 2-2 stopper ST1b may be positioned adjacent to the second side portion.

The first stopper ST1 and the second stopper ST2 may limit the movement distance of the moving assembly and absorb impacts.

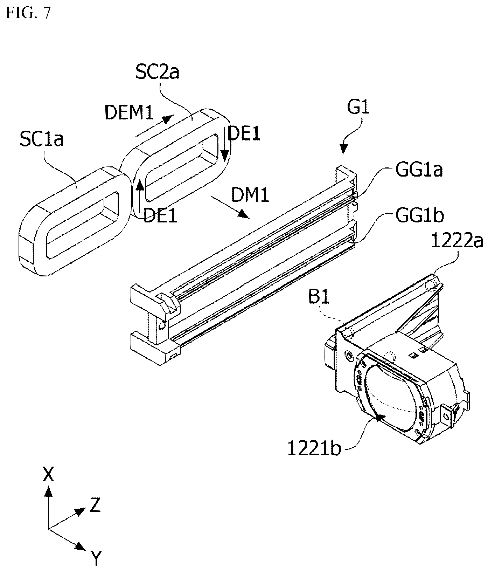

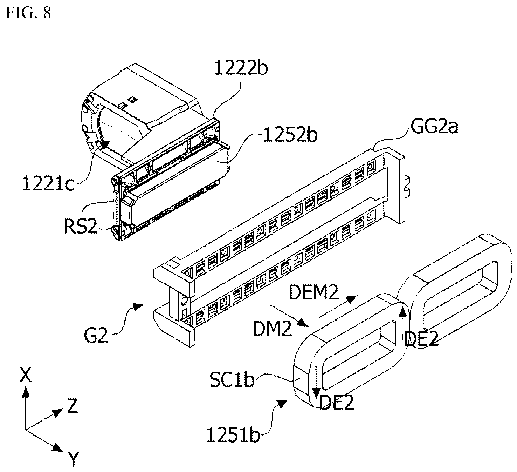

Referring to FIGS. 7 and 8, an electromagnetic force will be described below based on one coil. In the camera device according to the embodiment, an electromagnetic force DEM1 between the first magnet 1252a and the first coil 1251a may be generated so that the first lens assembly 1222a moves along a rail located on the inner surface of the housing through the first ball B1 in a horizontal direction to the optical axis, that is, in the third direction (Z-axis direction) or in a direction opposite to the third direction. At this time, the first magnet 1252a and the second magnet 1252b do not move to a region facing the edges of the first and second sub-coils. Thus, an electromagnetic force is formed based on the flow of current in the regions adjacent to the first sub-coil and the second sub-coil.

As described above, in the camera device according to the embodiment, the first magnet 1252a may be provided in the first lens assembly 1222a using, for example, a single-pole magnetization method. For example, in an embodiment, a surface (first surface) facing the outer surface of the first magnet 1252a may be an S pole. Further, the outer surface of the first magnet 1252a may be a surface facing the first coil 1251a. Further, a surface opposite to the first surface may be an N pole. Accordingly, only one of the N pole and the S pole may be positioned to face the first coil 1251a. Here, the following description will be made based on the outer surface of the first magnet 1252a being an S pole. Furthermore, the first coil 1251a may be composed of a plurality of sub-coils, and current may flow in directions opposite to each other in the plurality of sub-coils. That is, in a region adjacent to the second sub-coil SC2a in the first sub-coil SC1a, current may flow in the same manner as in 'DE1.'

In other words, a first region of the first sub-coil SC1a and a second region of the second sub-coil SC2a may have the same current direction. The first region of the first sub-coil SC1a is a region which overlaps the first driving magnet 1252a in a direction perpendicular to the optical axis direction (second direction) and is disposed perpendicular to the optical axis direction (for example, disposed in the first direction). The second region of the second sub-coil Sc2a is a region which overlaps the first driving magnet 1252a in a direction perpendicular to the optical axis direction (second direction) and is disposed perpendicular to the optical axis direction (for example, disposed in the first direction).

Furthermore, as shown in the drawing, in the embodiment, when a magnetic force is applied in the second direction (Y-axis direction) from the S pole of the first magnet 1252a and the current DE1 flows in the first direction (X-axis direction) in the first coil 1251a, the electromagnetic force DEM1 may act in the third direction (Z-axis direction) according to the interaction of electromagnetic forces (for example, Fleming's left hand rule).

At this time, since the first coil 1251a is fixed to the side portion of the housing, the first lens assembly 1222a in which the first magnet 1252a is disposed may move in a direction opposite to the Z-axis direction by the electromagnetic force DEM1 according to the direction of a current. That is, the optical driving magnet may move in a direction opposite to that of the electromagnetic force applied to the optical driving coil. Also, the direction of the electromagnetic force may be changed depending on the current of the coil and the magnetic force of the magnet.

Accordingly, the first lens assembly 1222a may move along the rail located on the inner surface of the housing through the first ball in the third direction or a direction parallel to the optical axis direction (in both directions). In this case, the electromagnetic force DEM1 may be controlled in proportion to the current DE1 applied to the first coil 1251a.

The first lens assembly 1222a or the second lens assembly 1222b may include a recess in which the first ball or the second ball is seated. The first lens assembly 1222a may include a first recess portion in which the first ball is seated. The second lens assembly 1222b may include a second recess portion in which the second ball is seated.

A plurality of first recess portions RS1 and a plurality of second recess portions RS2 may be provided. A length of some of the first recess portions RS1 in the optical axis direction (Z-axis direction) may be set in advance. Furthermore, a length of some of the second recess portions RS2 in the optical axis direction (Z-axis direction) may be set in advance. Accordingly, the first ball and the second ball may have movement distances thereof adjusted in the optical axis direction in the recess portions. In other words, the first recess portion RS1 or the second recess portion RS2 may be a stopper for the first or second ball.

Further, in the camera device according to the embodiment, the second magnet 1252b may be provided in the second lens assembly 1222b using, for example, a single-pole magnetization method.

Furthermore, the first coil 1251a may be composed of a plurality of sub-coils, and current may flow in directions opposite to each other in the plurality of sub-coils. That is, in a region adjacent to the second sub-coil SC2a in the first sub-coil SC1a, current may flow in the same manner as in 'DE1.'

Additionally, in an embodiment, any one of the N pole and the S pole of the second magnet 1252b may be positioned to face the second coil 1251b. Further, in an embodiment, a surface (first surface) facing the outer surface of the second magnet 1252b may be an S pole. Also, the first surface may be an N pole. The following description will be made based on the first surface being an N pole as shown in the drawing.

Furthermore, the second coil 1251b may be composed of a plurality of sub-coils, and current may flow in directions opposite to each other in the plurality of sub-coils. That is, in a region adjacent to the second sub-coil SC2b in the first sub-coil SC1b, current may flow in the same manner as in 'DE2.'

In an embodiment, when a magnetic force DM2 is applied in the second direction (Y-axis direction) from the first surface (N pole) of the second magnet 1252b and a current DE2 flows in the first direction (X-axis direction) from the second coil 1251b corresponding to the N pole, an electromagnetic force DEM2 may act in the third direction (Z-axis direction) according to the interaction of electromagnetic forces (for example, Fleming's left hand rule).

At this time, since the second coil 1251b is fixed to the side portion of the housing, the second lens assembly 1222b in which the second magnet 1252b is disposed may move in a direction opposite to the Z-axis direction by the electromagnetic force DEM2 according to the direction of a current. For example, as described above, the direction of the electromagnetic force may be changed depending on the current of the coil and the magnetic force of the magnet. Accordingly, the second lens assembly 1222b may move along the rail located on the inner surface of the housing through the second ball B2 in a direction parallel to the third direction (Z-axis direction). In this case, the electromagnetic force DEM2 may be controlled in proportion to the current DE2 applied to the second coil 1251b.

Referring to FIG. 9, in the camera device according to the embodiment, the driving unit may provide driving forces F3A, F3B, F4A, and F4B that move the first lens assembly 1222a and the second lens assembly 1222b of the lens unit 1220 in the third direction (Z-axis direction). The driving unit may include the optical driving coil 1251 and the optical driving magnet 1252 as described above. Further, the lens unit 1220 may move in the third direction (Z-axis direction) using the electromagnetic force formed between the optical driving coil 1251 and the optical driving magnet 1252.

At this time, the first coil 1251a and the second coil 1251b may be disposed in holes formed in the side portions (for example, the first side portion and the second side portion) of the housing 1230. Further, the second coil 1251b may be electrically connected to the first substrate. The first coil may be electrically connected to the second substrate. Accordingly, the first coil and the second coil may receive a driving signal (for example, current) supplied from a driving driver on the circuit board of the circuit board 1300 through the substrate unit 1270.

At this time, the first lens assembly 1222a on which the first magnet 1252a is seated may move in the third direction (Z-axis direction) by the electromagnetic forces F3A and F3B between the first coil and the first magnet 1252a. Additionally, the second lens group 1221b seated in the first lens assembly 1222a may also move in the third direction.

Further, by the electromagnetic forces F4A and F4B between the second coil and the second magnet 1252b, the second lens assembly 1222b on which the second magnet 1252b is seated may move in the third direction (Z-axis direction). Additionally, the third lens group 1221c seated in the second lens assembly 1222b may also move in the third direction.

Accordingly, as described above, the focal length or the magnification of the optical system may be changed by moving the second lens group 1221b and the third lens group 1221c. In an embodiment, the magnification may be changed by moving the second lens group 1221b. In other words, zoom may be achieved. Additionally, focus may be adjusted by moving the third lens group 1221c. In other words, auto-focus may be achieved.

Additionally, the second camera actuator may be a fixed zoom or continuous zoom type depending on the movement method of the second lens group (or third lens group).

Furthermore, the first Hall sensor 1253a and the second Hall sensor 1253b may be disposed at at least one of the first sub-coil and the second sub-coil. For example, the first Hall sensor 1253a and the second Hall sensor 1253b may overlap in a second direction. Alternatively, the first Hall sensor 1253a and the second Hall sensor 1253b may not overlap in the second direction. Alternatively, the first Hall sensor 1253a and the second Hall sensor 1253b may partially overlap in the second direction.

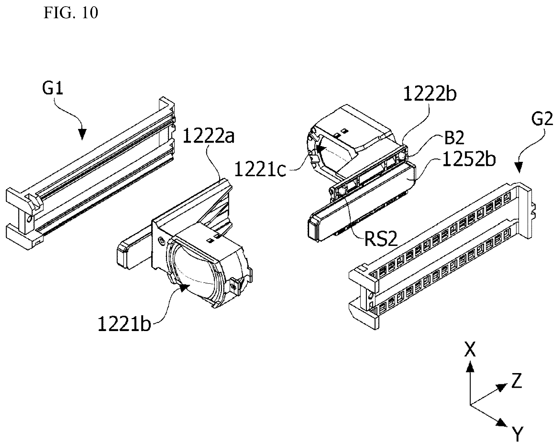

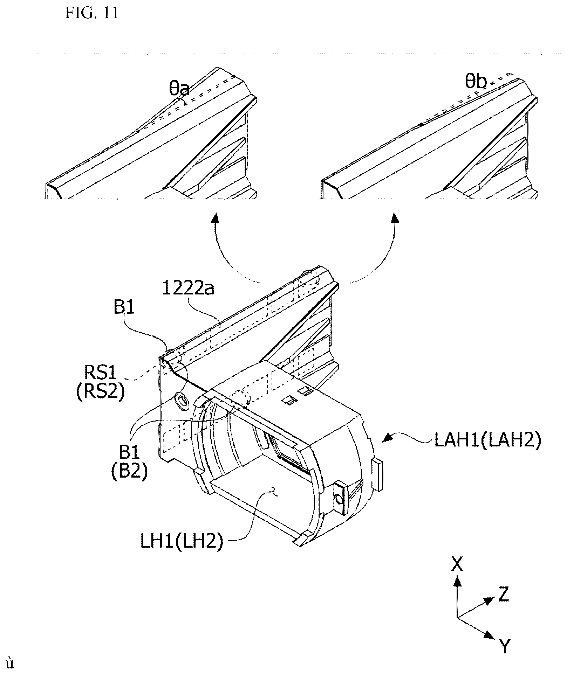

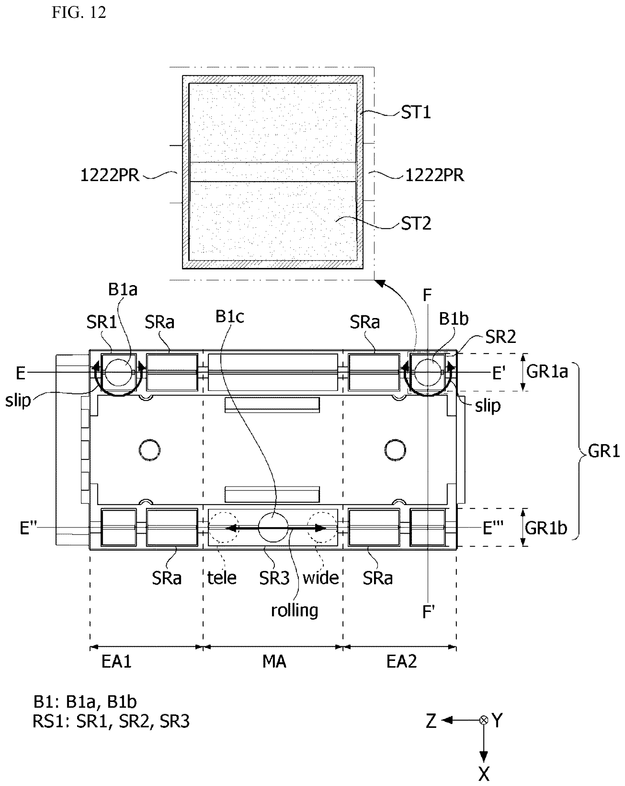

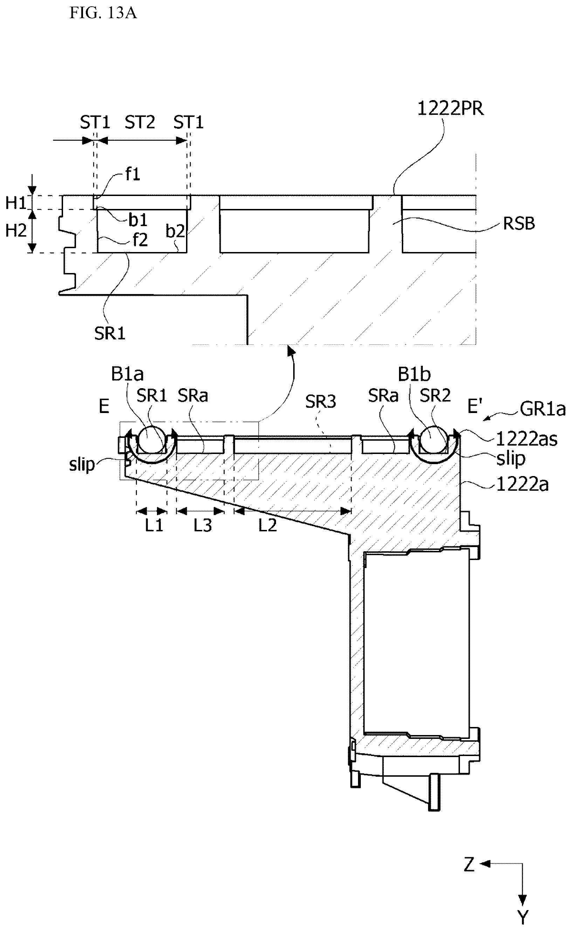

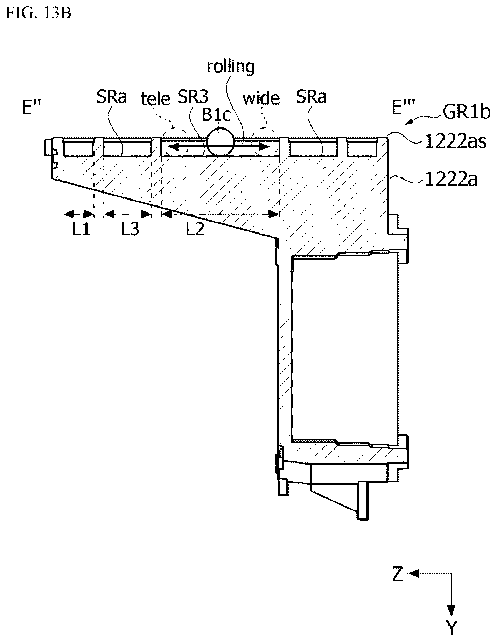

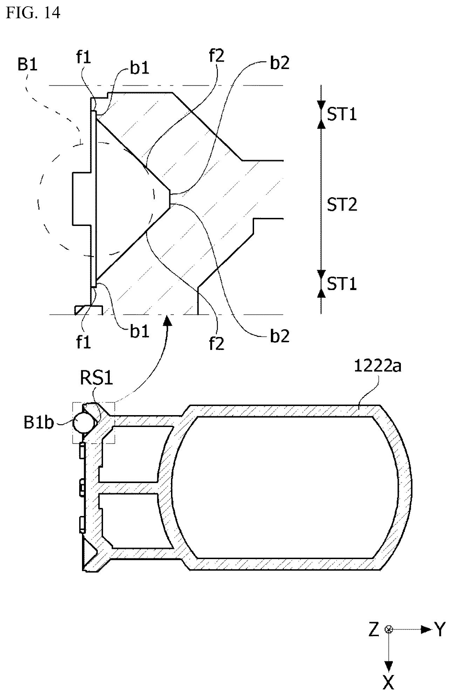

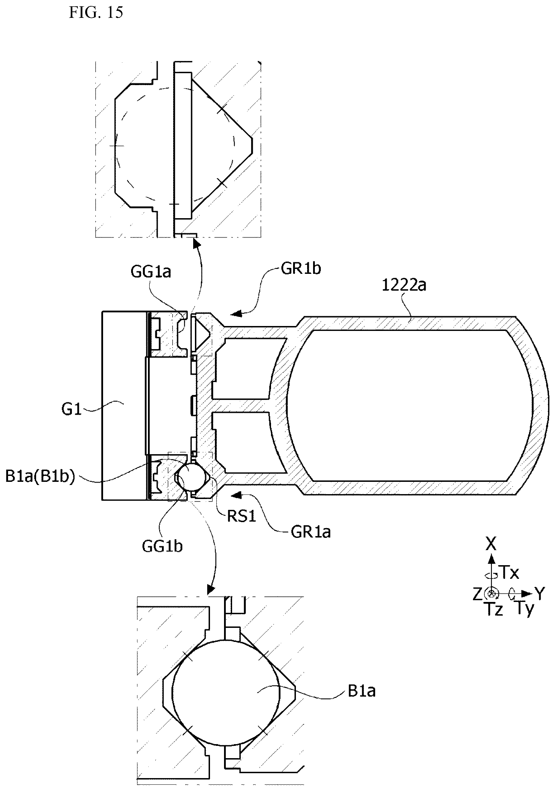

FIG. 10 is a perspective view of a first lens assembly, a first coupling member, a second coupling member, and a second lens assembly according to the embodiment, FIG. 11 is a perspective view of a first lens assembly in a second camera actuator according to a first embodiment, FIG. 12 is a side view of the first lens assembly in the second camera actuator according to the first embodiment, FIG. 13A is a cross-sectional view along line EE' in FIG. 12, FIG. 13B is a cross-sectional view along line E"E‴ in FIG. 12, FIG. 14 is a cross-sectional view along line FF' in FIG. 12, and FIG. 15 is a drawing showing a first lens assembly, a first guide unit, a first ball, and a second ball in the second camera actuator according to the first embodiment.

Referring to FIG. 10, the first lens assembly 1222a and the second lens assembly 1222b may be arranged spaced apart in the optical axis direction (Z-axis direction). Further, the first lens assembly 1222a and the second lens assembly 1222b, which are moving assemblies, may move in the optical axis direction (Z-axis direction) by the driving unit.

Furthermore, the first lens assembly 1222a may include a first lens holder LAH1 that holds and couples the second lens group 1221b. The first lens holder LAH1 may be coupled to the second lens group 1221b. Furthermore, the first lens holder LAH1 may include a first lens hole LH1 for accommodating the second lens group 1221b. That is, the second lens group 1221b including one or more lenses may be disposed in the first lens hole LH1. The first guide unit G1 may be disposed spaced apart from one side of the first lens holder LAH1. For example, the first guide unit G1 and the first lens holder LAH1 may be sequentially disposed in the second direction (Y-axis direction).

Further, the second lens assembly 1222b may include a second lens holder LAH2 that holds and couples the third lens group 1221c. Additionally, the second lens holder LAH2 may include a second lens hole LH2 for accommodating the third lens group 1221c. That is, one or more lenses may be disposed in the second lens hole LH2.

The second guide unit G2 may be disposed on the other side of the second lens holder LAH2. The second guide unit G2 may be disposed opposite to the first guide unit G1.

In an embodiment, the first guide unit G1 and the second guide unit G2 may overlap at least partially in the second direction (Y-axis direction). With this configuration, the space efficiency of the second driving unit that moves the first and second lens assemblies in the second camera actuator can be improved so that the miniaturization of the second camera actuator is easily achieved.

Additionally, the second guide unit G2 and the second lens holder LAH2 may be sequentially disposed in a direction opposite to the second direction (Y-axis direction).

The first ball, the first coil, and the like may be arranged in the first guide unit G1 as described above, and the second ball, the second coil, and the like may be arranged in the second guide unit G2 as described above.

In an embodiment, the first lens assembly 1222a and the second lens assembly 1222b may include outer surfaces adjacent to each other. The first lens assembly 1222a may include a first outer surface and the second lens assembly 1222b may include a second outer surface. The first outer surface may be a bottom surface of the first lens holder LAH1 based on the optical axis direction (Z-axis direction). Further, a third outer surface which will be described below may be an upper surface of the first lens holder LAH1. Additionally, the second outer surface may be an upper surface of the second lens holder LAH2, and a fourth outer surface may be a bottom surface of the second lens holder LAH2.

Further, the first outer surface and the second outer surface may overlap at least partially in the optical axis direction (Z-axis direction). In an embodiment, the first outer surface to the fourth outer surface may at least partially overlap each other in the optical axis direction (Z-axis direction).

For example, the coupling member (not shown) may come into contact with at least one of the first outer surface and the second outer surface.

According to an embodiment, the ball unit or balls may include the first ball B1 and the second ball B2. Additionally, the guide unit may include the first guide unit G1 and the second guide unit G2. The balls may be located between the moving assembly and the guide unit. For example, the first ball may be located between the first guide unit G1 and the first lens assembly 1222a. Further, the second ball B2 may be located between the second guide unit G2 and the second lens assembly 1222b.

Each of the first lens assembly 1222a and the second lens assembly 1222b may include a recess portion in which the balls are seated in a surface of the outer surface facing the guide unit (or a wing surface or a side surface of the first or second assembly). That is, the moving assembly may include a recess portion facing the guide unit. For example, the first lens assembly 1222a may include a first recess portion facing the first guide unit G1. The second lens assembly 1222b may include a second recess portion facing the second guide unit G2. Further, the ball unit or balls may be disposed in the recess portion. In an embodiment, as described above, the recess portion may include the first recess portion in which the first ball is seated and the second recess portion in which the second ball B2 is seated.

Referring to FIGS. 11 to 15, in the second camera actuator according to the first embodiment, the moving assembly may face the guide unit. Further, the moving assembly may include a recess in which the ball is seated. In an embodiment, the first lens assembly 1222a may include a first recess portion RS1 which faces the first guide unit and in which the ball (first ball) is seated. Alternatively, the first bobbin 1222a may move in the optical axis direction in the lens barrel and include a first guiding region GR1 disposed on one surface.

Further, the second lens assembly (1222b) may also include a second recess portion RS2 which faces the second guide unit and in which the ball (second ball) is seated. The second bobbin 1222b may move in the optical axis direction in the lens barrel and include a second guiding region disposed on one surface.

The following description is made based on the first guide unit and the first lens assembly. Here, the following description can be applied to at least one of the first guide unit and the second guide unit. Additionally, the following description can be applied to at least one of the first lens assembly and the second lens assembly.

Further, the first recess portion RS1 may be located in a first assembly side surface 1222as of the first lens assembly 1222a. The first assembly side surface 1222as may correspond to one surface of the first bobbin 1222a. Further, the first assembly side surface 1222as may be referred to as a wing surface. Further, the first assembly side surface 1222as may be a surface facing the first guide unit. Accordingly, the first recess portion RS1 may be located in one surface of the first bobbin 1222a described above.

Similarly, the second recess portion RS2 may be located in a second assembly side surface 1222bs of the second lens assembly 1222b. The second assembly side surface 1222bs may correspond to one surface of the second bobbin 1222b. The second assembly side surface 1222bs may be a surface facing the second guide unit. Accordingly, the second recess portion RS2 may be located in one surface of the second bobbin 1222b described above.

The wing surface or the first assembly side surface 1222as may extend parallel to the optical axis direction. For example, the wing surface or the first assembly side surface 1222as may extend toward a rear end (or the image sensor or the second lens assembly) in the optical axis direction.

Additionally, the wing surface or the first assembly side surface 1222as may be inclined with respect to the optical axis direction in a predetermined region. For example, the first assembly side surface 1222as may be inclined at predetermined angles θa and θb with respect to an axis parallel to the optical axis direction. For example, the first assembly side surface 1222as may be inclined outward in the optical axis direction. That is, the first assembly side surface 1222as may be closer to the first guide unit in the optical axis direction or toward the rear end.

For example, the first assembly side surface 1222as may be inclined inward in the optical axis direction. That is, the first assembly side surface 1222as may be spaced apart from the first guide unit in the optical axis direction or toward the rear end.

Further, the first recess portion RS1 may be disposed in the wing surface or the first assembly side surface 1222as.

Additionally, the first assembly side surface 1222as may include the first guiding region GR1. Further, the first recess portion RS1 may be located in the first guiding region GR1. Further, the first recess portion RS1 may include a plurality of recesses. The first recess portion RS1 may include a first recess SR1 and a second recess SR2 arranged at the edges, and a third recess SR3 disposed between the first recess SR1 and the second recess SR2 spaced apart in the optical axis direction. Additionally, the first recess portion RS1 may include a sub-recess SRa disposed between the first recess SR1 and the third recess SR3. The sub-recess SRa may be formed in each of a first edge region EA1 and a second edge region EA2.

In an embodiment, the first guiding region GR1 may include a first sub-guiding region GR1a and a second sub-guiding region GR1b. The first sub-guiding region GR1a may be disposed in the optical axis direction on one side of one surface (the first assembly side surface) of the first bobbin. The second sub-guiding region GR1b may be disposed in the optical axis direction on the other side of one surface (the first assembly side surface) of the first bobbin. For example, the first sub-guiding region GR1a may be located on an upper portion of the first assembly side surface, and the second sub-guiding region GR1b may be located on a lower portion of the first assembly side surface. The first sub-guiding region GR1a and the second sub-guiding region GR1b may be spaced apart from each other in the first direction. Further, the first sub-guiding region GR1a and the second sub-guiding region GR1b may overlap or be superimposed in the first direction. The recesses of the first recess portion described above may be located in the first sub-guiding region GR1a and the second sub-guiding region GR1b.

Furthermore, in an embodiment, the first lens assembly 1222a (or bobbin) or the first assembly side surface may include the first edge region EA1, the second edge region EA2, and a central region MA.

The first edge region EA1, the central region MA, and the second edge region EA2 may be sequentially disposed in a direction opposite to the optical axis direction. Additionally, the central region MA may be located between the first edge region EA1 and the second edge region EA2. The first edge region EA1 and the second edge region EA2 may be located at the edges in the first bobbin. For example, the first edge region EA1 and the second edge region EA2 may be located at the edges in the optical axis direction in the first bobbin.

The first recess SR1 and the second recess SR2 may be located at both end portions in the optical axis direction in the first assembly side surface 1222as. For example, the first recess SR1 and the second recess SR2 may be located at the edges among the plurality of recesses arranged in the first assembly side surface 1222as. Alternatively, the first recess SR1 and the second recess SR2 may be spaced apart from each other in the optical axis direction along the edges in the first assembly side surface 1222as.

Further, the first sub-guiding region GR1a may include the first recess SR1 formed in the first edge region EA1 and the second recess SR2 formed in the second edge region EA2. The first edge region EA1 and the second edge region EA2 may be spaced apart from each other in the optical axis direction. Accordingly, the first recess SR1 and the second recess SR2 may also be spaced apart in the optical axis direction. Furthermore, the first recess SR1 and the second recess SR2 may overlap each other in the optical axis direction.

Further, the second sub-guiding region GR1b may include the third recess SR3 formed in the central region.

Furthermore, the first bobbin or the first lens assembly may include a recess in the second sub-guiding region GR1b corresponding to the first recess SR1 in the first sub-guiding region GR1a. The recess corresponding to the first recess SR1 may also be referred to as a first recess or 'SR1.' Additionally, the first bobbin or the first lens assembly may include a recess in the second sub-guiding region GR1b corresponding to the second recess SR2 in the first sub-guiding region GR1a. The recess corresponding to the second recess SR2 may also be referred to as a second recess or 'SR2.' Further, the first bobbin or the first lens assembly may include a recess in the first sub-guiding region GR1a corresponding to the third recess SR3 of the second sub-guiding region GR1b. The recess corresponding to the third recess SR3 may also be referred to as a third recess or 'SR3.' That is, the first sub-guiding region GR1a and the second sub-guiding region GR1b may have recesses corresponding to each other. Here, the first recess and the second recess may be arranged in one of the first sub-guiding region and the second sub-guiding region, and the third recess may be disposed in the other of the first sub-guiding region and the second sub-guiding region. The first to third recesses will be described below based on this.

Furthermore, in the first sub-guiding region, the first recess portion or an additional recess SRa spaced apart from the first recess RS1 (or the second recess RS2) may be further disposed in the first edge region EA1 and the second edge region EA2.

In an embodiment, a length L2 of the third recess SR3 may be greater than a length L1 of the first recess SR1. Further, the length L1 of the first recess SR1 may be the same as a length of the second recess SR2. Accordingly, the length L2 of the third recess SR3 may be greater than the length of the second recess SR2. Further, a length L3 of the sub-recess SRa may be smaller than the length L2 of the third recess SR3. The length L3 of the sub-recess SRa may be greater than the length L1 of the first recess SR1.

For example, the length L3 of the sub-recess SRa may be greater than twice the length L1 of the first recess SR1. Thus, long strokes may be implemented.

Furthermore, the length L1 of the first recess SR1 (or second recess) may be the smallest in the first recess portion. Furthermore, the length L2 of the third recess SR3 may be the greatest in the first recess portion.

As described above, the first recess SR1 and the second recess SR2 may be spaced apart in the optical axis direction. The first recess SR1 and the second recess SR2 may overlap at least partially in the optical axis direction. Furthermore, as described above, since recesses corresponding to the first recess and the second recess are also arranged in the second sub-guiding region GR1b, the first bobbin may include a recess that overlaps or corresponds to the first recess SR1 in the vertical direction. Additionally, the first bobbin may include a recess that overlaps or corresponds to the second recess SR2 in the vertical direction.

Further, the third recess SR3 may be located in a region between the first recess SR1 and the second recess SR2. However, the third recess SR3 may not overlap the first recess SR1 and the second recess SR2 in the optical axis direction.

Also, a plurality of sub-recesses SRa may be provided. The plurality of sub-recesses SRa may overlap in the vertical direction or the first direction (X-axis direction).

Further, the third recess SR3 may be located in the central region MA in the first recess portion RS1. That is, the third recess SR3 may be located in the center in the first assembly side surface 1222as. Accordingly, the length in the optical axis direction of the third recess SR3 may be secured. In addition, a distance for rolling of the first ball (for example, the third sub-ball) disposed in the third recess SR3 may be easily secured.

Furthermore, in the first sub-guiding region GR1a of the first assembly side surface 1222as, the first recess SR1, the second recess SR2, and the sub-recesses SRa may overlap in the optical axis direction.

Furthermore, in the second sub-guiding region GR1b of the first assembly side surface 1222as, the third recess SR3 and the sub-recesses SRa may overlap in the optical axis direction.

Furthermore, the sub-recesses SRa according to the embodiment may have a length in the third direction (Z-axis direction or longitudinal direction) that is greater than a width in the first direction (X-axis direction or width direction). With this configuration, the ball (third sub-ball) that is seated in the recess may move a long distance in the third direction (Z-axis direction). Accordingly, the camera actuator may provide a long stroke. A thickness of an electronic device in which the camera actuator is installed may also be easily reduced, thereby achieving miniaturization.

In the first lens assembly 1222a of the second camera actuator according to the first embodiment, the first recess portion RS1 may include first step portions ST1 and a second step portion ST2. That is, the first recess SR1, the second recess SR2, the third recess SR3, and the sub-recesses SRa may include the first step portions ST1 and the second step portion ST2. Further, each of the sub-recesses may include the first step portions ST1 and the second step portion ST2.

In an embodiment, the first step portion ST1 may be disposed along an edge of the sub-recess. Further, the second step portion ST2 may be disposed inside the first step portions ST1. The second step portion ST2 may be at least partially surrounded by the first step portions ST1.

According to the embodiment, the first step portions ST1 may include first side surfaces f1 and a first bottom surface b1. The first side surface f1 may be located on an outer side of the first bottom surface b1. The first side surfaces f1 may be the outermost surfaces in the recess RS.

Furthermore, the first bottom surface b1 may be located on an inner side of the first side surface f1 and may be in contact with the first side surface f1. The first side surface f1 may be perpendicular or inclined to the first bottom surface b1. With this configuration, the shapes of the plurality of recesses may be the same as or similar to each other, as will be described below. Accordingly, the first lens assembly 1222a and the second lens assembly 1222b may accurately and efficiently move in the optical axis direction (Z-axis direction) by the first ball B1 and the second ball B2.

Furthermore, the second step portion ST2 may include second side surfaces f2 and a second bottom surface b2. The second side surface f2 may be in contact with the first bottom surface b1 and located on an inner side of the first bottom surface b1.

Furthermore, the second bottom surface b2 may be in contact with the second side surfaces f2 and located below the second side surfaces f2. The second side surfaces f2 may be inclined with respect to the second bottom surface b2. With this configuration, the ball (first ball or second ball) may be easily seated on the second side surfaces f2. Accordingly, the ball may come into contact with the second side surfaces f2.

Furthermore, a height H1 of the first step portions ST1 may be smaller than a height H2 of the second step portion ST2. Accordingly, accurate stroke implementation may be achieved by easily securing a ball seating space through the second step portion ST2 based on the third recess SR3 and making a plurality of recesses have the same depth.

Furthermore, the first side surfaces f1 may surround the first bottom surface b1, the second side surfaces f2, and the second bottom surface b2. Here, an inner side in each of the recesses is described based on the center of the recess. For example, a side in a direction toward a center axis in the recess is the 'inner side.' Further, a direction opposite to the direction toward the central axis or in a direction away from the central axis is an 'outer side.'

Furthermore, the first step portions ST1 according to the embodiment may have a closed loop shape. For example, the first step portions ST1 may have the closed loop shape in a plane ZX. By this shape, as described above, the shape of the first ball due to the recess may be made the same or substantially the same, and the ball may be prevented from escaping.

Further, as will be described below, the first step portions ST1 may have an open loop shape. This will be described below.

Additionally, the first lens assembly may include assembly protrusions 1222PR disposed between the recesses in the longitudinal direction (Z-axis direction). That is, recesses or sub-recesses may be located between the protrusions 1222PR spaced apart in the third direction (Z-axis direction).

Additionally, the assembly protrusions 1222PR may be disposed outside the recesses.

Further, the assembly protrusions 1222PR may prevent the ball (first ball or second ball) seated in the second step portion ST2 from escaping to the outside. For example, in order to effectively prevent the ball from escaping, the assembly protrusions 1222PR may be located on the bisecting line in the first direction (X-axis direction) of each recess.

In addition, the first step portions ST1 according to the embodiment are located outside the second step portion ST2, and the maximum width of the first step portion ST1 may be greater than the maximum width of the step portion ST2.

In a modified example, the sub-recesses SRa may not have first and second step structures, unlike the first and second recesses SR1 and SR2. A weight of the lens assembly may be reduced through the sub-recesses SRa, and the producing of the lens assembly may be facilitated

Further, in an embodiment, the ball unit may include a first ball B1 and a second ball B2. The first ball B1 or the second ball B2 may be located between the lens assembly and the guide unit.

The first ball B1 may be located between the first lens assembly 1222a and the first guide unit G1. Additionally, the second ball B2 may be located between the second lens assembly 1222b and the second guide unit G2.

In an embodiment, the first ball B1 may include a first sub-ball B1a disposed in the first recess SR1, a second sub-ball B1b disposed in the second recess SR2, and a third sub-ball B1c disposed in the third recess SR3.

That is, the first sub-ball B1a is driven in the first recess SR1. Further, the second sub-ball B1b is driven in the second recess SR2. Furthermore, the third sub-ball B1c is driven in the third recess. Alternatively, the first sub-ball B1a is driven in the first edge region. The second sub-ball B1b is driven in the second edge region. In addition, the third sub-ball B1c is driven in the central region.

Further, the first sub-ball B1a may be disposed between a first guide groove GG1b and the first bobbin. The second sub-ball B1b may be disposed between the first guide groove GG1b and the first bobbin. Furthermore, the third sub-ball B1c may be disposed between a second guide groove GGla and the first bobbin.

A length in the optical axis direction of the first recess SR1 may be one to two times a diameter of the first sub-ball B1a. Further, a length in the optical axis direction of the second recess SR2 may be one to two times a diameter of the second sub-ball B1b. Furthermore, a length in the optical axis direction of the third recess SR3 may be twice or more a diameter of the third sub-ball B1c.

The first sub-ball B1a and the second sub-ball B1b may overlap in the optical axis direction. The first sub-ball B1a and the second sub-ball B1b may be located in the first recess SR1 and the second recess SR2, which are located at both end portions of the first assembly side surface 1222as.

The third sub-ball B1c may be located in the third recess SR3. The third sub-ball B1c may be located between the first sub-ball B1a and the second sub-ball B1b which are spaced apart from each other.

The third sub-ball B1c may be located in a region between the first sub-ball B1a and the second sub-ball B1b. The third sub-ball B1c may be located on a side opposite to the first sub-ball B1a and the second sub-ball B1b. That is, the third sub-ball B1c may be located in the second sub-guiding region GR1b. For example, the third sub-ball B1c may not overlap the first sub-ball B1a and the second sub-ball B1b in the optical axis direction. The third sub-ball B1c may be offset from the first sub-ball B1a and the second sub-ball B1b in the optical axis direction. Furthermore, the third sub-ball B1c may be disposed spaced apart from the first sub-ball B1a and the second sub-ball B1b in the vertical direction.

The first sub-ball B1a may slip or spin in the first recess SR1. Furthermore, the second sub-ball B1b may slip or spin in the second recess SR2.

Further, the third sub-ball B1c may roll in the third recess SR3. That is, the third sub-ball B1c may move in the optical axis direction.

For example, in the third recess SR3, the third sub-ball B1c may move in the optical axis direction. The third sub-ball B1c may move toward one side or the other side along the optical axis in the third recess SR3. For example, the third sub-ball B1c may be located at an end portion in the optical axis direction in the third recess SR3. In other words, the third sub-ball B1c may be located in a region closest to the image sensor in the third recess. In this case, the first lens assembly in the second camera actuator may be present in a tele state or position.

Further, the third sub-ball B1c may be located at an end portion in a direction opposite to the optical axis direction in the third recess SR3. In other words, the third sub-ball B1c may be located in a region closest to the first camera actuator in the third recess. In this case, the first lens assembly in the second camera actuator may be present in a wide state or position.

Furthermore, when the first lens assembly moves in the optical axis direction, in a case in which the third sub-ball B1c is movable in the third recess SR3, the first sub-ball B1a (or the second sub-ball) may rotate (spin or slip) in response to the rolling of the third sub-ball B1c. Further, in a case in which the third sub-ball B1c does not move in the third recess SR3, the first sub-ball B1a (or the second sub-ball) may rotate in a state in which the third sub-ball B1c spins or is in a non-rotating state to move the first lens assembly. For example, in a case in which the third sub-ball B1c is located at any one of both end portions of the third recess SR3, the rotation of the first sub-ball (or second sub-ball) described above may occur when the first lens assembly moves in a direction opposite to a direction toward an end portion where the third sub-ball is located.

With this configuration, the first and second lens assemblies may move in parallel along the optical axis even with a long stroke by the first sub-ball, the second sub-ball, and the third sub-ball. That is, even when the first and second lens assemblies move in the optical axis direction, dynamic tilt may be reduced. That is, decentering may be reduced. Furthermore, as the first sub-ball B1a or the second sub-ball B1b slips, the consumption of driving power (for example, current) for movement of the first and second lens assemblies may be reduced. That is, driving efficiency may be improved.

Furthermore, at least one of the first sub-ball B1a and the second sub-ball B1b may overlap the lens unit accommodated in the first lens assembly in the horizontal direction. For example, at least one of the first sub-ball B1a and the second sub-ball B1b may overlap the second lens group or the first lens holder in the horizontal direction. Furthermore, at least one of the first recess SR1 and the second recess SR2 may overlap the lens unit accommodated in the first lens assembly in the horizontal direction. For example, at least one of the first recess SR1 and the second recess SR2 may overlap the second lens group or the first lens holder in the horizontal direction. Thus, the decentering based on the optical axis is reduced, and tilting in at least one of the first to third directions by deformation of the shape described above or tolerance when driving the first lens assembly may be minimized.

Furthermore, the third sub-ball B1c may be disposed spaced apart from the first sub-ball B1a or the second sub-ball B1b in the first direction. Thus, the structural instability between the first guide unit G1 and the first lens assembly caused by the first ball B1 may be resolved.

The first guide groove group GGla and GG1b of the first guide unit G1 may be positioned to face the first recess portion RS1. The first ball B1 may be located between the first guide groove group GG1a and GG1b of the first guide unit G1 and the first recess portion RS1. Particularly, the first sub-ball B1a may be located in the first recess SR1.

The first guide groove group GG1a and GG1b may include the first guide groove GG1b and the second guide groove GG1a. The first guide groove GG1b may face the first sub-guiding region GR1a. Further, the second guide groove GG1b may face the second sub-guiding region GR1b.

The second guide groove GGla and the first guide groove GG1b may be arranged spaced apart from each other in the vertical direction. Alternatively, the second guide groove GG1a and the first guide groove GG1b may overlap each other in the vertical direction. Further, the lengths in the optical axis direction of the second guide groove GGla and the first guide groove GG1b may be greater than the length in the optical axis direction of the first lens assembly 1222a. Thus, long strokes may be implemented.

Furthermore, the second guide groove GGla and the first guide groove GG1b may be grooves having different shapes. For example, at least one of the second guide groove GGla and the first guide groove GG1b may be composed of a bottom surface and side surfaces perpendicular to the bottom surface. Further, the other of the second guide groove GGla and the first guide groove GG1b may be composed of a bottom surface and side surfaces which are inclined with respect to the bottom surface (not perpendicular to the bottom surface).

Further, the second guide groove GGla and the first guide groove GG1b may have different contact points with the ball. For example, the ball may be in one-point or three-point contact with the second guide groove GG1a. Further, the ball may be in twopoint contact with the first guide groove GG1b.

For example, the side surfaces of the first guide groove GG1b may be inclined with respect to the bottom surface. Further, the first sub-ball B1a may face the first guide groove GG1b. Furthermore, the first sub-ball B1a may be seated in the first guide groove GG1b. Furthermore, the third sub-ball B1c may be seated in the second guide groove GG1a. With this configuration, rotational constraint may be performed based on the first sub-ball B1a spinning or slipping. For example, the first sub-balls B1a may be disposed spaced apart in the optical axis direction. In this case, even when the first lens assembly moves in the optical axis direction in the second camera actuator according to the embodiment, the first lens assembly may be suppressed from a first rotation Tx with respect to the vertical direction and a second rotation Ty with respect to the horizontal direction during the movement. Therefore, when driving, tilting may be suppressed. Furthermore, decentering in the vertical direction may also be minimized.

Furthermore, the occurrence of decentering in the horizontal direction can also be suppressed by the first sub-ball B1a. For example, compared to the second camera actuator composed of only the third sub-ball and not the first or second sub-ball, the second camera actuator according to the embodiment may provide reduced decentering. For example, when the wing unit of the first lens assembly is inclined inward or 0.2 degrees toward the optical axis, tilting and decentering phenomena in the structure according to the embodiment may be suppressed more significantly than the structure in which the rolling is provided.

In a modified example, a plurality of first sub-balls and a plurality of second sub-balls may overlap in the vertical direction. Further, the first sub-balls and the second sub-balls may be positioned to overlap in the vertical direction. Further, the third sub-ball may be disposed spaced apart from the first sub-balls in the optical axis direction. Furthermore, a plurality of third sub-balls may be positioned to overlap in the vertical direction.

Further, the first sub-ball may be arranged at a front end of the first lens assembly. Accordingly, the first sub-ball may overlap the lens group of the first lens assembly or the first lens holder in the horizontal direction. Alternatively, the third sub-ball may be located at a rear end of the first lens assembly. In this case, the third recess may be disposed spaced apart from the first recess in the optical axis direction and located at a rear end of the first lens assembly. With this configuration, decentering can be minimized and the rotation with respect to the vertical direction and the optical axis direction can be suppressed.

Furthermore, the first to third sub-balls may not be arranged on the same plane. That is, the first to third sub-balls may not all come into contact with a plane perpendicular to the horizontal direction. This may be implemented by a structure in which the first bobbin is bent in the optical axis direction.

Furthermore, in this embodiment, the second bobbin may have the same structure as the first bobbin. The second bobbin may have a second guiding region. The second guiding region may correspond to the first guiding region of the first bobbin.

Further, the second guiding region may have a third sub-guiding region and a fourth sub-guiding region. The third sub-guiding region may correspond to the first sub-guiding region. The fourth sub-guiding region may correspond to the second sub-guiding region.

Furthermore, the second bobbin may have a third edge region, a fourth edge region, and a central region. The central region may be located between the third edge region and the fourth edge region. The third edge region may correspond to the first edge region of the first bobbin. The fourth edge region may correspond to the second edge region of the first bobbin. Furthermore, the second guiding region may include a fourth recess formed in the third edge region, a fifth recess formed in the fourth edge region that is spaced apart from the third edge region in the optical axis direction, and a sixth recess formed in the central region. The fourth recess may correspond to the first recess. The fifth recess may correspond to the second recess. The sixth recess may correspond to the third recess. Thus, a length of the sixth recess in the optical axis direction may be greater than lengths of the fourth and fifth recesses in the optical axis direction.

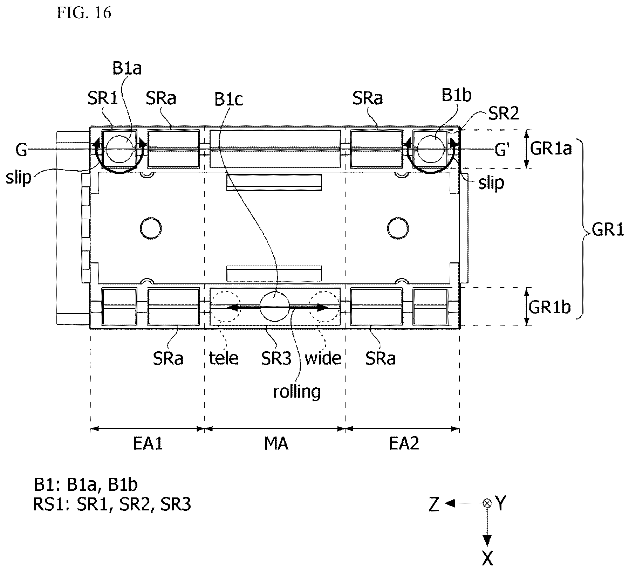

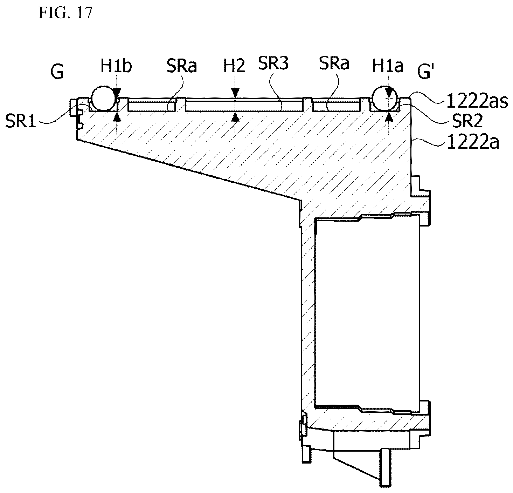

FIG. 16 is a side view of a lens assembly in a second camera actuator according to a second embodiment, and FIG. 17 is a cross-sectional view along line GG' in FIG. 16.

Referring to FIGS. 16 and 17, the second camera actuator according to the second embodiment may include a lens unit, a housing, a driving unit, a base unit, a substrate unit, and stoppers. Furthermore, the second camera actuator may further include a shield can (not shown), elastic units (not shown), and a coupling member (not shown).

In addition, the description of the first lens assembly, the first guide unit, and the first ball described above in the second camera actuator can be applied equally, except for the following contents.

The first recess portion RS1 may include a plurality of recesses. The first recess portion RS1 may include a first recess SR1 and a second recess SR2 arranged at the edges, and a third recess SR3 disposed between the first recess SR1 and the second recess SR2 spaced apart in the optical axis direction. Furthermore, the first recess portion RS1 may include sub-recesses SRa disposed between the first recess SR1 and the third recess SR3.

In this case, the first assembly side surface 1222as may be inclined outward in the optical axis direction. That is, the first assembly side surface 1222as may be bent outward.

Correspondingly, the first recess SR1 and the second recess SR2 may have different lengths in the optical axis direction and the horizontal direction. Furthermore, a length of the third recess SR3 may vary in the optical axis direction and the horizontal direction. For example, the length of the first recess SR1 or the second recess SR2 may increase in the optical axis direction.

For example, a height H1b of a recess disposed in a side portion in the optical axis direction of the first recess SR1 or the second recess SR2 may be different from a height H1a of a recess disposed in a side portion opposite thereto. The height H1b of the first recess SR1 may be different from the height H1a of the second recess SR2. For example, the height H1b of the first recess SR1 may be smaller than the height H1a of the second recess. The height may correspond to the length in the second direction or the horizontal direction.

Further, a height H2 of the third recess SR3 may be smaller than or equal to the height H1a of the second recess. The height H2 of the third recess SR3 may be greater than or equal to the height H1b of the first recess.

With this configuration, in response to the bent structure of the first assembly side surface 1222as, the structural reliability by the first lens assembly 1222a, the first guide unit G1, and the first ball B1 can be improved. Furthermore, the frictional force caused by the first sub-ball is not large, which can reduce current consumption.

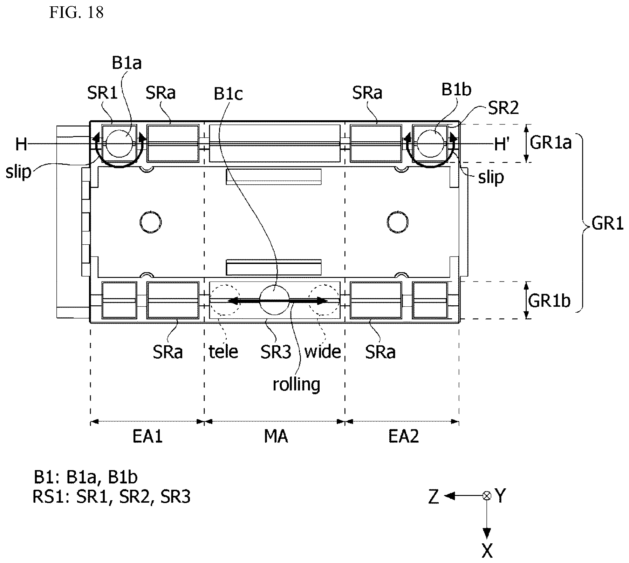

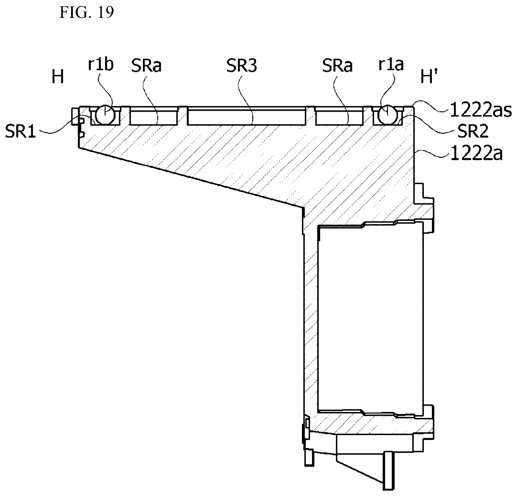

FIG. 18 is a side view of a lens assembly in a second camera actuator according to a third embodiment, and FIG. 19 is a cross-sectional view along line HH' in FIG. 18.

Referring to FIGS. 18 and 19, the second camera actuator according to the third embodiment may include a lens unit, a housing, a driving unit, a base unit, a substrate unit, and stoppers. Furthermore, the second camera actuator may further include a shield can (not shown), elastic units (not shown), and a coupling member (not shown).

In addition, the description of the first lens assembly, the first guide unit, and the first ball described above in the second camera actuator can be applied equally, except for the following contents.

The first recess portion RS1 may include a plurality of recesses. The first recess portion RS1 may include a first recess SR1 and a second recess SR2 arranged at the edges, and a third recess SR3 disposed between the first recess SR1 and the second recess SR2 spaced apart in the optical axis direction. Furthermore, the first recess portion RS1 may include sub-recesses SRa arranged between the first recess SR1 and the third recess SR3.

In response to the bending of the first assembly side surface 1222as described above, the first sub-balls may have different diameters in the optical axis direction. For example, a length of a first sub-ball B1a may increase in the optical axis direction.

For example, a diameter r1b of the first sub-ball B1a seated in the first recess may be different from a diameter r1a of a second sub-ball B1b seated in the second recess. For example, the diameter r1a of the second sub-ball B1b seated in the second recess may be greater than the diameter r1b of the first sub-ball B1a seated in the first recess.

Furthermore, a diameter of a third sub-ball B1c may correspond to the diameter of the first sub-ball B1a (or the second sub-ball). For example, the diameter of the third sub-ball B1c may be the same as or different from the diameter of the first sub-ball B1a (or the second sub-ball). The diameter of the third sub-ball B1c may be greater than the diameter of the first sub-ball B1a (or the second sub-ball). In this way, rolling may be achieved more easily. With this configuration, the structural reliability of the second camera actuator can be improved. Furthermore, driving efficiency can be improved.

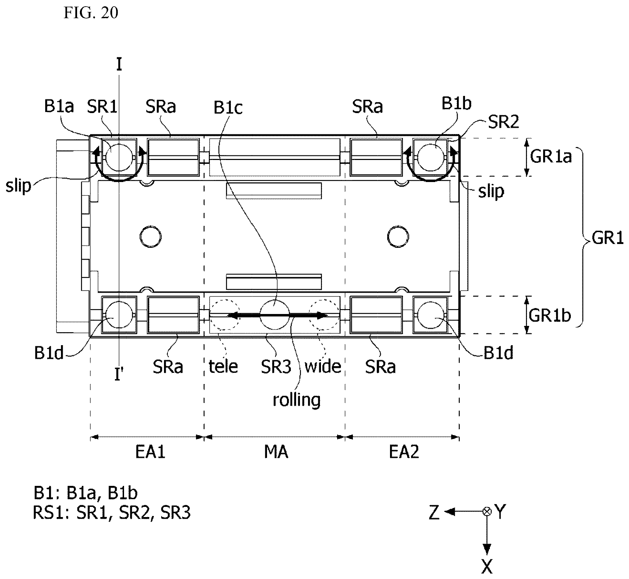

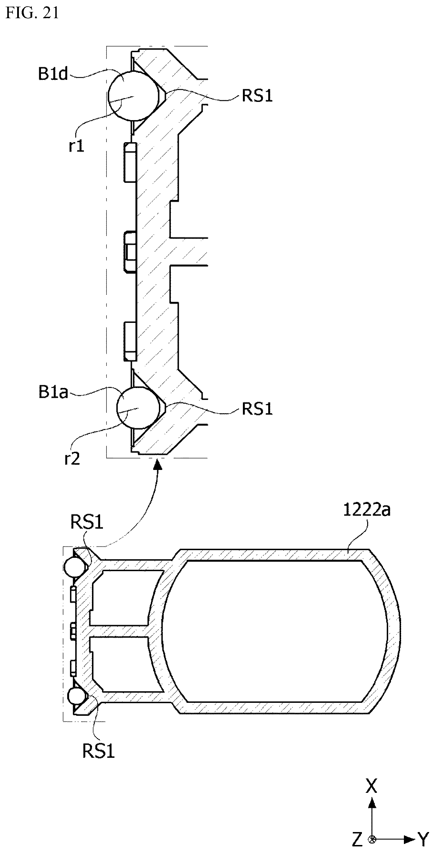

FIG. 20 is a side view of a lens assembly in a second camera actuator according to a fourth embodiment, and FIG. 21 is a cross-sectional view along line II' in FIG. 20.

Referring to FIGS. 20 and 21, the second camera actuator according to the fourth embodiment may include a lens unit, a housing, a driving unit, a base unit, a substrate unit, and stoppers. Furthermore, the second camera actuator may further include a shield can (not shown), elastic units (not shown), and a coupling member (not shown).

In addition, the description of the first lens assembly, the first guide unit, and the first ball described above in the second camera actuator can be applied equally, except for the following contents.

The first recess portion RS1 may include a plurality of recesses. The first recess portion RS1 may include a first recess SR1 and a second recess SR2 arranged at the edges, and a third recess SR3 disposed in a region between the first recess SR1 and the second recess SR2 spaced apart in the optical axis direction. Furthermore, the first recess portion RS1 may include sub-recesses SRa disposed between the first recess SR1 and the third recess SR3.

Furthermore, the first ball B1 may further include additional balls B1d disposed in first recesses disposed in a different sub-guiding region. The additional balls B1d may overlap the first sub-ball B1a (or the second sub-ball) in the first direction or the third direction.

The additional balls B1d may be disposed spaced apart from the first sub-ball B1a (or the second sub-ball) in the first direction. Further, the additional balls B1d may be arranged spaced apart from each other in the third direction or the optical axis direction.

Furthermore, the third sub-ball B1c may be located between the additional balls B1d that are arranged spaced apart from each other. In a modified example, the third sub-ball B1c may be located between first sub-balls B1a that are arranged spaced apart from each other.

In this embodiment, a diameter r2 of the additional ball B1d may be different from a diameter r1 of the first sub-ball B1a (or the second sub-ball). The diameter r2 of the additional ball B1d may be smaller than the diameter r1 of the first sub-ball B1a (or the second sub-ball). With this configuration, even when the second camera actuator is dropped, the reliability of the moving assembly and the guide part can be improved.

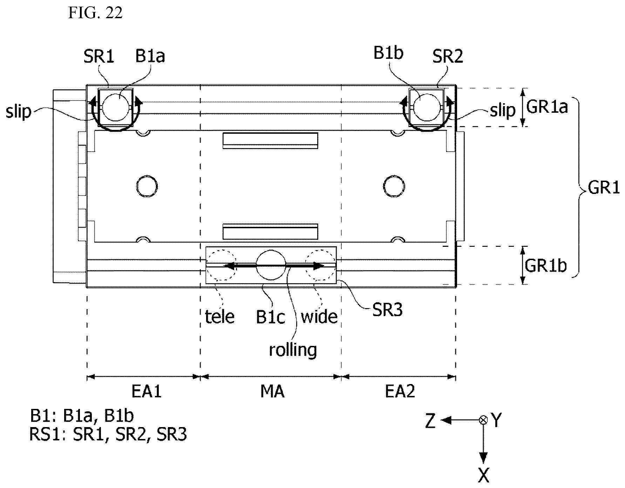

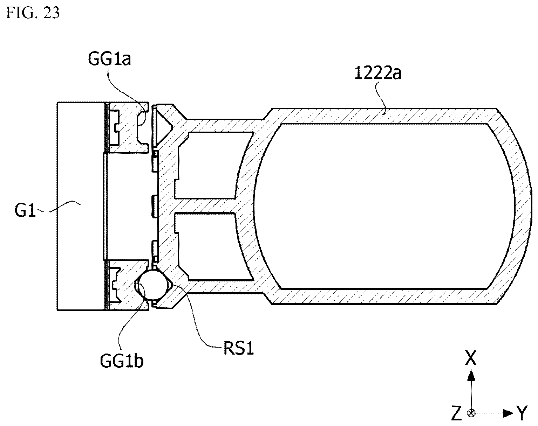

FIG. 22 is a side view of a lens assembly in a second camera actuator according to a fifth embodiment, and FIG. 23 is a view showing a first lens assembly, a first guide unit, a first ball, and a second ball in the second camera actuator according to the fifth embodiment.

Referring to FIGS. 22 and 23, the second camera actuator according to the fifth embodiment may include a lens unit, a housing, a driving unit, a base unit, a substrate unit, and stoppers. Further, the second camera actuator may further include a shield can (not shown), elastic units (not shown), and a coupling member (not shown).

In addition, the description of the first lens assembly, the first guide unit, and the first ball described above in the second camera actuator can be applied equally, except for the following contents.

In this embodiment, first recesses SR1 and a second recess SR2 may be arranged spaced apart in the optical axis direction. Further, the third recess SR3 may be located in a region between the first recess SR1 and the second recess SR2 that are spaced apart from each other. Further, an additional recess (for example, a sub-recess or a third recess) may not be present between the first recesses SR1 that are spaced apart from each other in the optical axis direction. Further, a first sub-ball B1a may be located in the first recess SR1. A second sub-ball B1b may be located in the second recess SR2. Further, a third sub-ball B1c may be located in a third recess SR3.

The first recess SR1 may be positioned to face the first guide groove GG1b. The second recess SR2 may be positioned to face the first guide groove GG1b. Furthermore, the third recess SR3 may be positioned to face the second guide groove GG1a.

Thus, the first recess SR1 and the first guide groove GG1b may overlap in the horizontal direction. The second recess SR2 and the first guide groove GG1b may overlap in the horizontal direction. Furthermore, the first recess SR1 may be offset from the second guide groove GG1a in the horizontal direction. Further, the second recess SR2 may be offset from the second guide groove GGla in the horizontal direction. Furthermore, the third recess SR3 and the second guide groove GG1a may overlap in the horizontal direction. Furthermore, the third recess SR3 may be offset from the first guide groove GG1b in the horizontal direction.

With this configuration, structural deformation due to the formation of an additional groove can be suppressed. Furthermore, the occurrence of the ball escaping to another sub-recess can be blocked early.

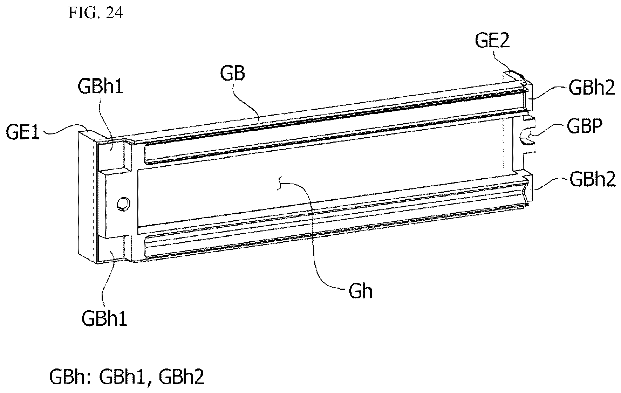

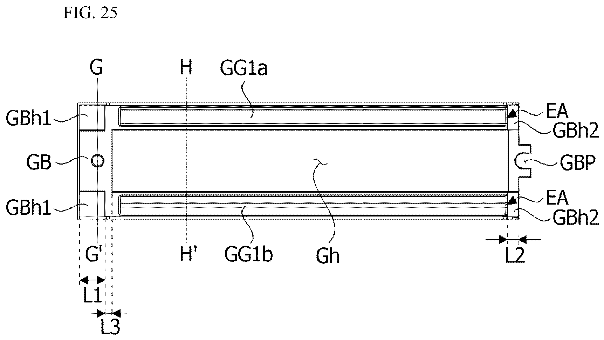

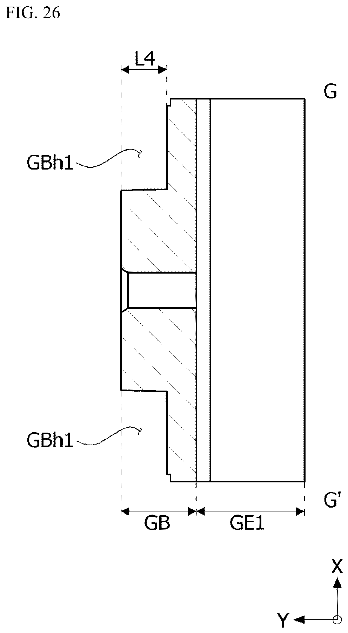

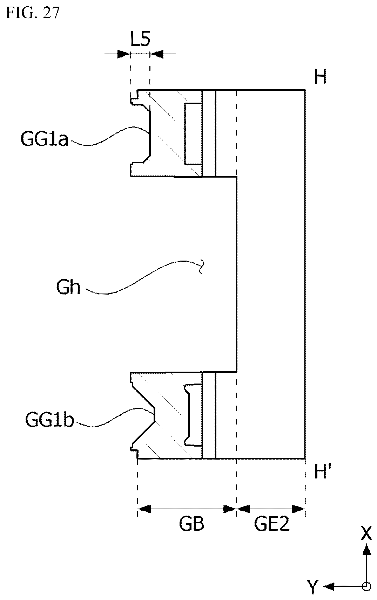

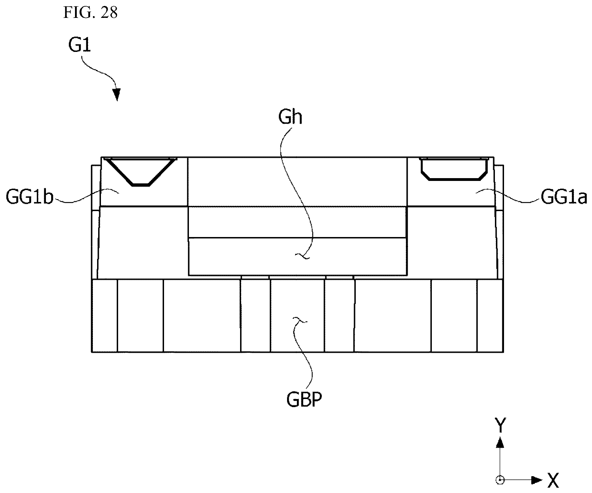

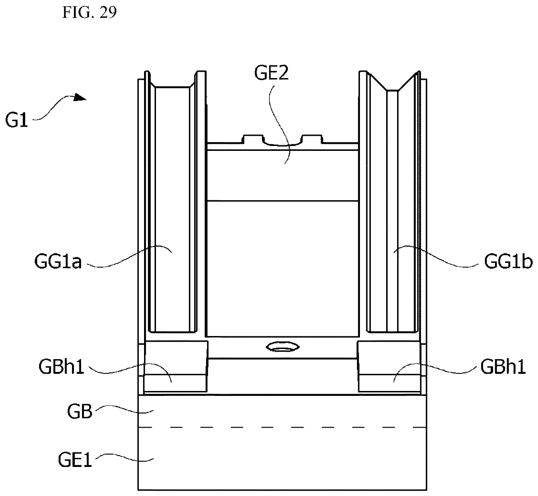

FIG. 24 is a perspective view showing a first guide unit according to another embodiment, FIG. 25 is a side view illustrating the first guide unit according to another embodiment, FIG. 26 is a cross-sectional view along line GG' in FIG. 25, FIG. 27 is a cross-sectional view along line HH' in FIG. 25, FIG. 28 is another side view showing the first guide unit according to another embodiment, and FIG. 29 is another perspective view showing the first guide unit according to another embodiment.

Referring to FIGS. 24 to 29, the guide unit may include guide grooves in which a first ball and a second ball are seated. The guide grooves may correspond to the first and second recesses described above. The guide grooves may include a first guide groove and a second guide groove.

A first guide unit G1 may include first guide grooves GGla and GG1b facing first recesses RS1. Furthermore, a second guide unit G2 may include second guide grooves GG2a and GG2b facing second recesses or a second recess portion RS2. The first guide grooves GGla and GG1b and the second guide grooves GG2a and GG2b may be grooves extending in the third direction (Z-axis direction). Further, the first guide grooves GG1a and GG1b and the second guide grooves GG2a and GG2b may be grooves having different shapes. For example, at least one of the first guide grooves GGla and GG1b and the second guide grooves GG2a and GG2b may be a groove with inclined side surfaces and the other thereof may be a groove with side surfaces perpendicular to a bottom surface thereof.

In the drawings, the first guide unit G1 is shown and the following description is based on this. The description of the first guide unit G1 can be equally applied to the second guide unit G2. That is, the following description can be applied to at least one of the first guide unit and the second guide unit.

Furthermore, the first guide unit G1 may include a guide base GB, a first extension portion GE1, and a second extension portion GE2.

The guide base GB may include the first guide grooves GGla and GG1b in which a ball (for example, a first ball) is seated and base grooves GBh that overlap the first guide grooves in the optical axis direction (Z-axis direction).

The first guide unit G1 may include the first extension portion GE1 extending from one end of the guide base GB to one side and the second extension portion GE2 extending from the other end of the guide base GB to one side.

For example, the first extension portion GE1 may be located at an end portion opposite to the optical axis direction of the guide base GB. The second extension portion GE2 may be located at an end portion in the optical axis direction of the guide base GB. Accordingly, the first extension portion GE1 may be positioned closer to the first camera actuator than the second extension portion GE2. Further, the second extension portion GE2 may be positioned closer to the image sensor than the first extension portion GE1.

Additionally, the first extension portion GE1 and the second extension portion GE2 may be portions that extend or are bent toward the one sides from both sides of the guide base GB.

In an embodiment, the first extension portion GE1 and the second extension portion GE2 may extend inward or outward from the guide base GB. That is, the first extension portion GE1 may extend inward or outward from the guide base GB. The second extension portion GE2 may extend inward or outward from the guide base GB. For example, the first extension portion GE1 and the second extension portion GE2 may extend outward from the guide base GB. The first extension portion GE1 and the second extension portion GE2 may extend from the guide base GB to the adjacent substrate unit.

The base grooves GBh may be located on both sides of the guide base GB. Furthermore, the base grooves GBh may be located at the edges of the first guide. In an embodiment, the base grooves GBh may include a first base groove GBh1 disposed in one side of the guide base GB and a second base groove GBh2 disposed in the other side. Additionally, the first base groove GBh1 may be disposed adjacent to the first camera actuator or further away from the image sensor than the second base groove GBh2.

The first base groove GBh1 and the second base groove GBh2 may be arranged spaced apart in the optical axis direction. Furthermore, a plurality of first base grooves GBh1 and a plurality of second base grooves GBh2 may be provided. The plurality of first base grooves GBh1 may be arranged spaced apart in the vertical direction or the first direction (X-axis direction). The plurality of second base grooves GBh2 may be arranged spaced apart in the vertical direction or the first direction (X-axis direction).

Furthermore, the first base grooves GBh1 may be positioned adjacent to the first extension portion GE1. The second base grooves GBh2 may be positioned adjacent to the second extension portion GE2. The first guide grooves GGla and GG1b may be located between the first base grooves GBh1 and the second base grooves GBh2.

The first base grooves GBh1 and the second base grooves GBh2 may overlap the first guide grooves GG1a and GG1b in the optical axis direction. Even when a length of the first guide unit increases when implementing a long stroke, the bending phenomenon of the first guide unit may be suppressed even in the assembly between the first guide unit and the main barrel. Therefore, the driving accuracy of the moving assembly may be improved.

Additionally, the first extension portion GE1 and the second extension portion GE2 may overlap the base grooves GBh in the horizontal direction (Y-axis direction). That is, the first extension portion GE1 and the second extension portion GE2 are disposed on both sides of the guide base GB, and the base grooves GBh may also be arranged on both sides of the guide base GB. Further, the base grooves GBh may be in contact with some regions of the main barrel. With this configuration, even when the first guide unit G1 is connected or coupled (assembled) to the main barrel using the base grooves GBh, the region of the first guide groves GGla and GG1b in the first guide unit may not be bent. For example, in the first guide unit, the base grooves GBh may be located in an inner surface of the first guide unit. Accordingly, during assembly, a force (for example, pushing) may be applied to an outer side of the first guide unit inserted into the main barrel. At this time, in order to provide a long stroke, a great length in the optical axis direction of the first guide unit may also be provided. Further, even when a force is applied to the base grooves for assembly, structural deformation of the first guide unit (for example, a region where the guide grooves are located) may be suppressed depending on the position of the base grooves described above. Furthermore, the ease of assembly may also be improved as the base grooves are positioned adjacent to a corner of the edge of the first guide unit.

Furthermore, the guide unit G1 or the guide base GB may include a guide hole Gh. A coil (first coil), a magnet (first magnet), and a yoke (first yoke) may be located in the guide hole Gh.

The guide holes Gh and the first guide grooves GGla and GG1b) may overlap in the vertical direction or the second direction. Accordingly, a driving force may be efficiently provided to move the moving assembly in the optical axis direction.

Furthermore, an area of the guide hole Gh located on the inner side in the first guide unit G1 may be greater than an area of the guide hole located on the outer side. For example, the maximum length in the optical axis direction of the first coil may be greater than the maximum movement distance in the optical axis direction of the first magnet and the first yoke. In other words, the first magnet and the first yoke may not move toward the outside of the first coil in the optical axis direction. With this configuration, the generation of a counter electromotive force between the first coil and the first magnet can be suppressed. Thus, the second camera actuator can provide improved driving efficiency.

A length L1 in the optical axis direction (Z-axis direction) of the first base groove GBh1 may be greater than a length L2 in the optical axis direction of the second base groove GBh2. Correspondingly, a distance in the optical axis direction of the first extension portion GE1 may be greater than a distance in the optical axis direction of the second extension portion GE2. With this configuration, the rigidity or reliability of the first guide unit can be maintained when the base grooves and the lens barrel are assembled.

Furthermore, the first base grooves GBh1 may be arranged spaced apart from the first guide grooves GGla and GG1b in the optical axis direction. The inner sides of the first guide grooves GGla and GG1b may be located on sides opposite to each other in the optical axis direction. Accordingly, when the first ball moves in a direction opposite to the optical axis direction, the first guide grooves GGla and GG1b may be stoppers or escaping prevention members. In addition, the rigidity of the first guide unit may be improved.

Further, the first guide grooves GGla and GG1b may be open toward the second base grooves GBh2. That is, the first guide grooves GGla and GG1b may have open regions EA located at one end portions thereof. The coupling or the like between the first guide unit and the main barrel may be easily achieved by the open regions EA.

In an embodiment, a depth L4 in the horizontal direction of the first base groove GBh1 may be smaller than a depth L5 in the horizontal direction of the first guide grooves GG1a and GG1b. With this configuration, a coupling force between the first guide unit and the main barrel may increase. Furthermore, even when the first ball moves along the first guide grooves GG1a and GG1b, structural deformation of the first guide unit may be suppressed.

Additionally, the second extension portion GE2 may include an extension protrusion portion that protrudes or extends in the optical axis direction. A base coupling portion GBP may be located in the extension protrusion portion. The base coupling portion GBP may have slits or grooves. The coupling force between the main barrel and the first guide unit can be further improved by the base coupling portion GBP.

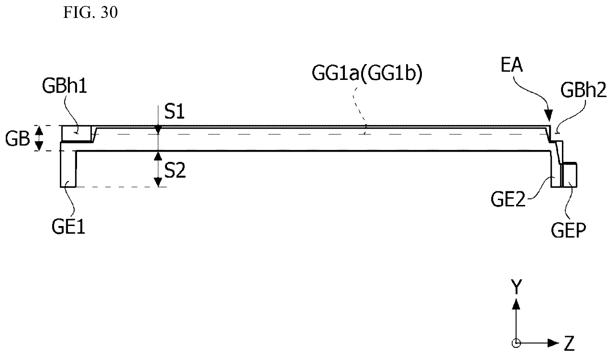

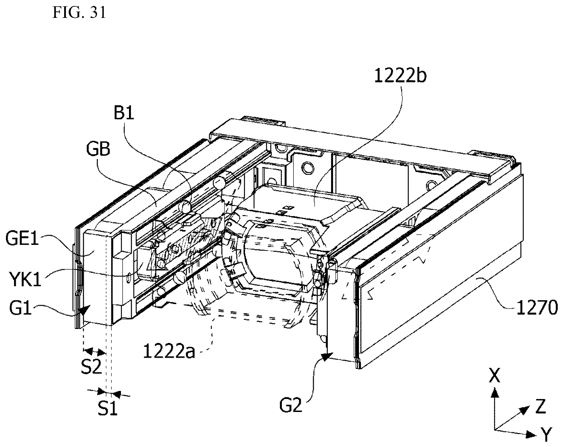

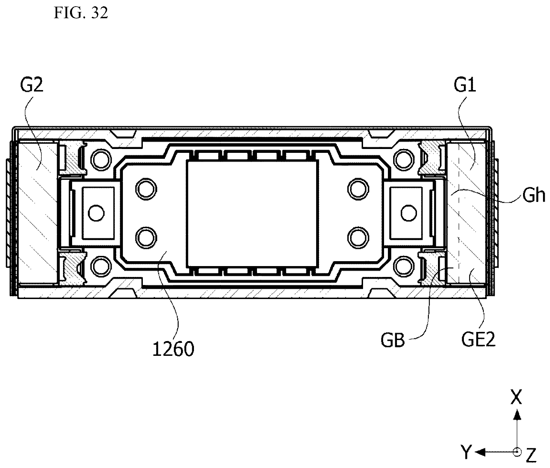

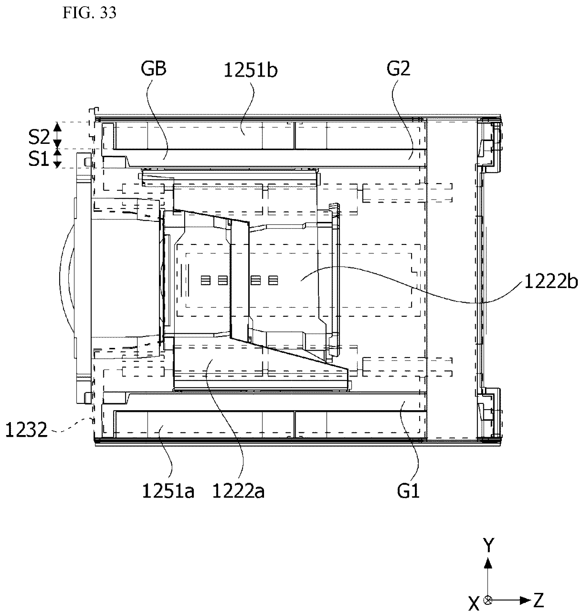

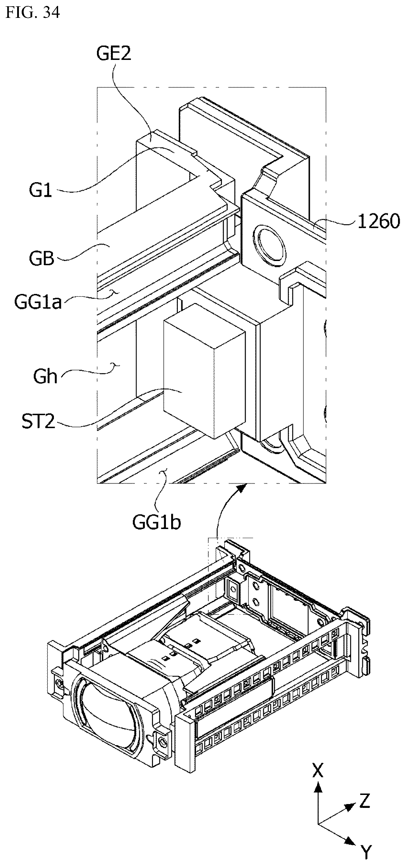

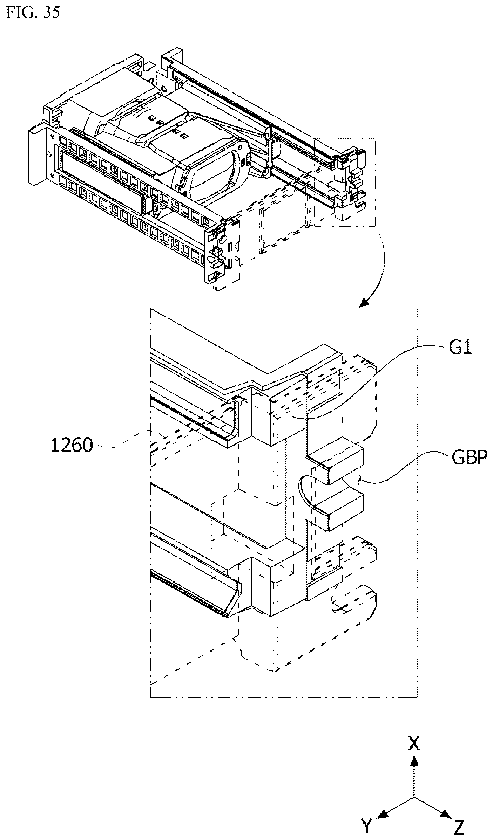

FIG. 30 is still another side view showing the first guide unit according to another embodiment, FIG. 31 is an internal perspective view of a second camera actuator according to another embodiment, FIG. 32 is a cross-sectional view along line II in FIG. 4, FIG. 33 is a plan view of the second camera actuator according to another embodiment, FIG. 34 is a perspective view and a partially enlarged view of the second camera actuator according to another embodiment, and FIG. 35 is an enlarged view of a rear end of the second camera actuator according to another embodiment.

Referring to FIGS. 30 and 31, the first guide unit according to another embodiment may include a first region S1 overlapping base grooves GBh in the optical axis direction, and a second region S2 overlapping a first extension portion GE1 and a second extension portion GE2 in the optical axis direction. The first region S1 may be located inside the second region S2.

A first magnet and a first yoke of a driving unit may be located in a guide hole of the first region S1. That is, the first magnet and the first yoke may be located between the first extension portion GE1 and the second extension portion GE2. Further, a first coil of the driving unit may be located in a guide hole of the second region S2. Thus, the first magnet and the first yoke may be located inside the first coil. Furthermore, the first region S1 and a first ball may overlap at least partially in the optical axis direction.

With this configuration, the first guide unit G1 may have a sufficient stroke space when the first lens assembly 1222a moves in the optical axis direction. Furthermore, a length in the optical axis direction of the guide hole may correspond to a length in the optical axis direction of the guide groove. Accordingly, the first yoke and the first magnet in the guide hole may come into contact with the inner surface of the guide base on both sides of the guide hole. Accordingly, when the first lens assembly is driven, the first lens assembly may come into contact with the first stopper or the inner surface of the guide base disposed on both sides of the guide hole. In this way, the reliability of the second camera actuator due to driving impact may be improved.

Referring further to FIGS. 32 and 33, the guide hole Gh of the first guide unit G1 may partially overlap a base unit 1260 in the first direction or the vertical direction. Accordingly, the coupling force between the base unit 1260, the first guide unit G1, and the main barrel may be improved. Additionally, the base unit 1260 and the second extension portion GE2 may overlap in the horizontal direction. Accordingly, the structural reliability of the first base unit may be maintained even when the base unit and the first guide unit are assembled.

Similarly, as described above, the contents described for the first guide unit G1 can be equally applied to the second guide unit G2. The first guide unit G1 and the second guide unit G2 may be symmetrically arranged based on the optical axis or an axis parallel to the optical axis direction.

That is, the first region S1 of the second guide unit G2 may be located inside the second region S2. Further, a coil (second coil, 1251b) may be located in the second region S2. Furthermore, a coil (second coil) may be located between the first extension portion and the second extension portion of the second guide unit G2. The first extension portion and the second extension portion may overlap the accommodated coil in the optical axis direction. Accordingly, the structural stability of the first coil may also be improved.

Referring further to FIGS. 34 and 35, in the second camera actuator according to another embodiment, a second stopper ST2 and the first guide unit G1 may overlap in the optical axis direction.

The second stopper ST2 may be located on the other side of the first guide unit where an exposed region is located. Particularly, a part of a guide hole Gh may overlap the second stopper ST2 in the optical axis direction. Further, a part of the first region of the first guide unit G1 may overlap the second stopper ST2 in the optical axis direction. Accordingly, the second stopper ST2 may come into contact with the first lens assembly, the first yoke, the first magnet, or the like. With this configuration, the second stopper ST2 may come into contact with the first lens assembly, the first yoke, and the first magnet to maintain the reliability of each component when the first lens assembly moves. Furthermore, at least a part of the second stopper ST2 may be located between first guide grooves GG1a and GG1b which are spaced apart in the vertical direction. Thus, a compact second camera actuator can be implemented. In addition, exposed regions or the first guide grooves are located on upper and lower portions of the second stopper ST2 to prevent the first ball from escaping.

Additionally, the second extension portion GE2 and the base unit 1260 may overlap in the horizontal direction. Accordingly, the base unit 1260, the main barrel, and the first guide unit G1 are located on the other side of the first guide unit, and the durability or the structural maintenance against physical impacts when the base unit 1260, the main barrel, and the first guide unit G1 are assembled may be improved.

Further, the base coupling portion GBP of the second extension portion BE2 may extend in the optical axis direction. Thus, grooves may be formed in different directions, unlike the guide grooves or the base grooves formed in the horizontal direction. Furthermore, the first guide unit G1 may be coupled to the other component (main barrel or base unit) in various directions. Thus, structural reliability can be further improved by improving the coupling force between the components.

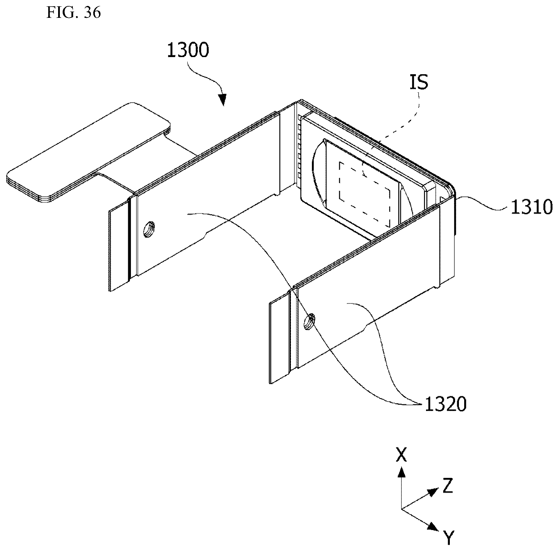

FIG. 36 is a schematic diagram showing the circuit board according to an embodiment.

Referring to FIG. 36, as described above, the circuit board 1300 according to the embodiment may include a first circuit board unit 1310 and a second circuit board unit 1320. The first circuit board unit 1310 may be located below a base and coupled to the base. Furthermore, an image sensor IS may be disposed on the first circuit board unit 1310. Further, the first circuit board unit 1310 and the image sensor IS may be electrically connected. That is, the base may be located at a rear end of the second camera actuator, and the image sensor and the circuit board (first circuit board unit) may be located at a rear end of the base. The base may include a filter (for example, an infrared filter or the like). The circuit board 1300 may include the image sensor and the sensor base described above.

Also, the second circuit board units 1320 may be located on side portions of the base. Particularly, the second circuit board units 1320 may be located on a first side portion of the base. Accordingly, the second circuit board unit 1320 may be positioned adjacent to a first coil positioned adjacent to the first side portion to facilitate electrical connection. Additionally, the second circuit board units 1320 may be located on a second side portion. In this way, a plurality of second circuit board units 1320 may be provided. However, the present invention is not limited thereto and any one of the second circuit board units 1320 may be disposed on only one of the first side portion and the second side portion.

Furthermore, the circuit board 1300 may additionally include a fixed board (not shown) located on a side surface thereof. Thus, even when the circuit board 1300 is made of a flexible material, the circuit board 1300 may be coupled to the base while maintaining rigidity due to the fixed board.

The second circuit board unit 1320 of the circuit board 1300 may be located on a side portion of a driving unit 1250. The circuit board 1300 may be electrically connected to a first driving unit and a driving unit. For example, electrical connection may be made using SMT. However, the present invention is not limited to such a method.

The circuit board 1300 may include a circuit board having electrically connectable wiring patterns, such as rigid printed circuit boards (rigid PCBs), flexible printed circuit boards (flexible PCBs), and rigid flexible printed circuit boards (rigid flexible PCBs). However, the present invention is not limited to these types.

Additionally, the circuit board 1300 may be electrically connected to another camera module in a terminal or a processor of the terminal. Through this, the camera actuator described above and the camera module including the same may transmit and receive various signals in the terminal.

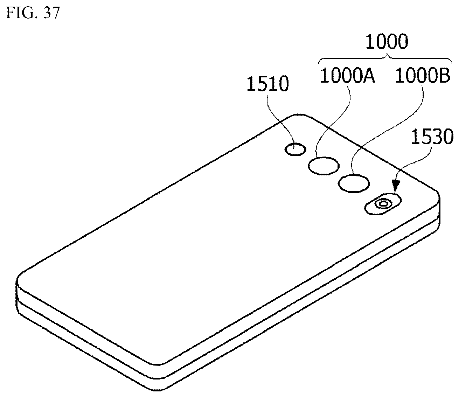

FIG. 37 is a perspective view of a mobile terminal to which the camera module according to the embodiment is applied.

As shown in FIG. 37, a mobile terminal 1500 in the embodiment may include a camera module 1000, a flash module 1530, and an auto-focus device 1510 provided on a rear surface thereof.

The camera module 1000 may include an image capturing function and an auto-focus function. For example, the camera module 1000 may include an auto-focus function using an image.

The camera module 1000 processes image frames of still or moving images obtained by an image sensor in a capturing mode or a video call mode.

The processed image frames may be displayed on a predetermined display unit and stored in a memory. A camera (not shown) may also be disposed on the front surface of a body of a mobile terminal.

For example, the camera module 1000 may include a first camera module 1000A and a second camera module 1000B, and OIS along with an AF or zoom function may be implemented by the first camera module 1000A.

The flash module 1530 may include a light-emitting element that emits light therein. The flash module 1530 may be operated by the operation of the camera of the mobile terminal or through the user's control.

The auto-focus device 1510 may include one of packages of surface-light-emitting laser devices as a light-emitting unit.

The auto-focus device 1510 may include an auto-focus function using a laser. The auto-focus device 1510 may be mainly used in conditions where it is difficult to use the auto-focus function using the image of the camera module 1000, for example, in a close range of 10 m or less or in a dark environment.

The auto-focus device 1510 may include a light emitting unit including a vertical cavity surface emitting laser (VCSEL) semiconductor device and a light receiving unit that converts light energy into electrical energy, such as a photodiode.

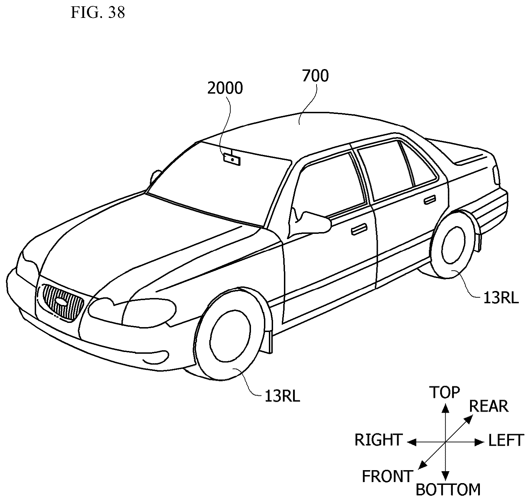

FIG. 38 is a perspective view of a vehicle to which the camera module according to the embodiment is applied.

For example, FIG. 38 is an exterior view of the vehicle including a vehicle driving assistance device to which the camera module 1000 according to the embodiment is applied.

Referring to FIG. 38, a vehicle 700 in the embodiment may include wheels 13FL and 13FR that rotate by a power source and a predetermined sensor. The sensor may be, but is not limited to, a camera sensor 2000.

The camera sensor 2000 may be a camera sensor to which the camera module 1000 according to the embodiment is applied. The vehicle 700 in the embodiment may obtain image information through the camera sensor 2000 that captures a front image or a surrounding image and use the image information to determine a lane non-identification situation and create a virtual lane when the lane is not identified.

For example, the camera sensor 2000 may capture the front of the vehicle 700 to obtain the front image and a processor (not shown) may analyze objects included in the front image to obtain image information.

For example, when objects such as lanes, adjacent vehicles, traffic obstructions, and center dividers, curbs, and street trees which correspond to indirect road markings are captured in the image captured by the camera sensor 2000, the processor may detect these objects and include information regarding these objects in the image information. At this time, the processor may obtain distance information to an object detected through the camera sensor 2000 to further supplement the image information.

The image information may be information regarding an object captured in an image. The camera sensor 2000 may include an image sensor and an image processing module.

The camera sensor 2000 may process still images or moving images obtained by an image sensor (for example, a CMOS or a CCD).

The image processing module may process still images or moving images obtained through an image sensor, extract necessary information, and transmit the extracted information to the processor.

At this time, although the camera sensor 2000 may include a stereo camera to improve the measurement accuracy of the object and secure more information such as the distance between the vehicle 700 and the object, the present invention is not limited thereto.

Although the embodiments have been mainly described above, these are merely examples and are not intended to limit the present invention, and it can be seen by those skilled in the art that various modifications and applications not exemplified herein are possible without departing from the essential characteristics of the present invention. For example, each of the components specifically shown in the embodiments may be modified and implemented. Further, it should be interpreted that differences related to the modifications and the applications are included in the scope of the present invention defined by the appended claims.

## Claims

1. A camera actuator comprising:
a housing;
a first bobbin which moves in an optical axis direction in the housing and includes a first guiding region disposed on one surface thereof;
a driving unit which moves the first bobbin;
a first guide unit which is disposed in the housing and faces the first guiding region of the first bobbin; and
a first ball which supports the first bobbin to move in the optical axis direction,
wherein the first guiding region includes a first sub-guiding region disposed in the optical axis direction on one side of the one surface of the first bobbin and a second sub-guiding region disposed in the optical axis direction on the other side of the one surface of the first bobbin,
the first sub-guiding region includes a first recess formed in a first edge region and a second recess formed in a second edge region spaced apart from the first edge region in the optical axis direction,
the second sub-guiding region includes a third recess formed in a central region thereof, and
a length of the third recess in the optical axis direction is greater than a length of the first recess in the optical axis direction.

2. The camera actuator of claim 1, wherein the first ball includes: a first sub-ball disposed in the first recess; a second sub-ball disposed in the second recess; and a third sub-ball disposed in the third recess.

3. The camera actuator of claim 2, wherein the first sub-ball is driven in the first recess, the second sub-ball is driven in the second recess, and the third sub-ball is driven in the third recess.

4. The camera actuator of claim 2, wherein at least one of the first sub-ball and the second sub-ball overlaps a lens unit accommodated in the first bobbin in a horizontal direction.

5. The camera actuator of claim 2, wherein at least one of the first recess and the second recess overlaps a lens unit accommodated in the first bobbin in a horizontal direction.

6. The camera actuator of claim 2, wherein the first guide unit includes a first guide groove which faces the first sub-guiding region, and a second guide groove which faces the second sub-guiding region.

7. The camera actuator of claim 6, wherein the first guide groove has side surfaces which are inclined with respect to a bottom surface thereof, and
the first guide groove faces the first sub-ball.

8. The camera actuator of claim 2, wherein the length of the first recess in the optical axis direction is one to two times a diameter of the first sub-ball, and the length of the third recess in the optical axis direction is two times or more a diameter of the second sub-ball.

9. The camera actuator of claim 1, wherein the first bobbin includes a wing surface which faces the first guide unit, and
the wing surface is inclined with respect to the optical axis direction in a predetermined region.

10. The camera actuator of claim 9, wherein the second recess is located in the wing surface, and
the wing surface is inclined toward an outside of the first bobbin.
